# EUROPEAN PATENT SPECIFICATION

(11) **EP 4 132 189 B1**
(45) Date of publication and mention of the grant of the patent: **23.10.2024**
(21) Application number: 21785424.9
(22) Date of filing: 22.02.2021
(51) Int. Cl.: H04W 74/04, H04W 28/20, H04W 84/12, H04W 48/18

(54) **NEGOTIATION METHOD FOR OPERATION MODE, INITIATING END, RECEIVING END, CHIP SYSTEM, AND MEDIUM**
VERHANDLUNGSVERFAHREN FÜR BETRIEBSMODUS, INITIIERUNGSSEITE, EMPFANGSSEITE, CHIPSYSTEM UND MEDIUM
PROCÉDÉ DE NÉGOCIATION POUR MODE DE FONCTIONNEMENT, EXTRÉMITÉ DE LANCEMENT, EXTRÉMITÉ DE RÉCEPTION, SYSTÈME DE PUCE ET SUPPORT

(30) Priority: 10.04.2020 CN 202010281486
(43) Date of publication of application: 08.02.2023
(60) Divisional application: 24200735.9
(73) Proprietor: Huawei Technologies Co., Ltd., Shenzhen, Guangdong 518129 (CN)
(72) Inventor: YU, Jian, Shenzhen, Guangdong 518129 (CN); LI, Yunbo, Shenzhen, Guangdong 518129 (CN); GUO, Yuchen, Shenzhen, Guangdong 518129 (CN); GAN, Ming, Shenzhen, Guangdong 518129 (CN); HU, Mengshi, Shenzhen, Guangdong 518129 (CN)
(74) Representative: Isarpatent
(86) International application number: PCT/CN2021/077313
(87) International publication number: WO 2021/203850

(56) References cited:
- WO-A1-2020/032639
- WO-A1-2020/071999
- CN-A- 106 789 761
- US-A1- 2017 367 096
- US-A1- 2018 124 746
- US-A1- 2018 317 128
- US-A1- 2020 112 408
- US-A1- 2020 112 408

## Description

### TECHNICAL FIELD

This disclosure relates to the field of communications technologies, and in particular, the invention relates to a negotiation method for an operating mode, a communication apparatus and a computer-readable storage medium thereof in the WI-FI field.

### BACKGROUND

A WLAN (Wireless Local Area Network, wireless local area network) develops from 802.11a/g, to 802.11n, 802.11ac, and 802.11 ax. A channel width and the number of space-time streams that are allowed to be transmitted by the WLAN are as follows:

**Table 1 Maximum channel width and maximum number of space-time streams allowed to be transmitted**

| | 802.11a/g | 802.11n (HT) | 802.11ac (VHT) | 802.11ax (HE) | 802.11be (EHT) |
|---|---|---|---|---|---|
| Channel width | 20 MHz | 20 MHz and 40 MHz | 20 MHz, 40 MHz, 80 MHz, and 160 MHz | 20 MHz, 40 MHz, 80 MHz, and 160 MHz | 20 MHz, 40 MHz, 80 MHz, 160 MHz, 240 MHz, and 320 MHz |
| Number of space-time streams/number of spatial streams | 1 | 1 to 4 | 1 to 8 | 1 to 8 | 1 to 16 |
| Supported maximum data rate (data rate) | 54 Mbit/s | 600 Mbit/s | 6.9 Gbit/s | 9.6 Gbit/s | 46.08 Gbit/s |

The 802.11n standard is also called high throughput (High Throughput, HT), the 802.11ac standard is called very high throughput (Very High Throughput, VHT), and the 802.11 ax standard is called high efficient (High Efficient, HE). Standards prior to HT, such as 802.11 a/b/g, are collectively referred to as Non-HT (non-high throughput). In addition, the 802.11 series standards further include 802.11b that uses a non-OFDM (Orthogonal Frequency Division Multiplexing, orthogonal frequency division multiplexing) mode.

As a channel width increases, the number of MIMO (Multiple Input Multiple Output, multiple-input multiple-output) space-time streams increases, and a data rate for data transmission also increases (as shown in the Table 1). However, more power is consumed. A greater channel width means that a channel width of a radio frequency front end needs to be greater, there are a greater number of streams, and more radio frequency links are required. In addition, more data needs to be processed per unit time. Therefore, total power consumption increases accordingly. An operating mode indication (Operation Mode Indication, OMI) method is designed in the 802.11 ax standard. An initiator and a responder negotiate an operating mode (Operation Mode, OM). A normal operating channel width and a normal number of space-time streams are reduced to cut power consumption. When a large amount of service traffic needs to be transmitted, a greater channel width and a greater number of space-time streams are restored.

In a next-generation standard after the 802.11 ax, for example, the 802.11be standard, also referred to as an extremely high throughput (Extremely High Throughput, EHT) standard, there are more channel width modes, and the number of space-time streams is expanded from a maximum of 8 to a maximum of 16. How to negotiate an enhanced OMI for the 802.11be standard is an urgent technical problem to be resolved.

US 2017/367096 A1 relates to a method and apparatus for changing the operating mode in wireless local area network (LAN) system.

US 2020/112408 A1 relates to a multi-user preamble format for a wireless local area network.

### SUMMARY

The object of the present invention is to provide a negotiation method for an operating mode, applied to an initiator and a receiver for operating mode negotiation, a communication apparatus and a computer-readable storage medium thereof. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

In this case, OM negotiation can be implemented in a scenario in which channel width modes increase and the number of space-time streams exponentially increases.

In this application, an OM negotiation solution in an existing 802.11ax standard is extended, and a new OM negotiation solution is provided, to implement enhanced OM negotiation.

According to a first aspect according to the invention, this application discloses negotiation method for an operating mode, applied to an initiator for operating mode negotiation. The method includes the following steps.

An initiator transmits an operating mode indication OMI to a responder. The OMI includes at least either of channel width indication information and space-time stream number indication information. A capability range of a channel width indicated by the channel width indication information is greater than 160 MHz. A capability range of the number of space-time streams indicated by the space-time stream number indication information is greater than 8. In an embodiment not claimed, a capability range of a channel width indicated by the channel width indication information is less than or equal to 160 MHz. A capability range of the number of space-time streams indicated by the space-time stream number indication information is greater than 8.

In an embodiment not claimed, a capability range of a channel width indicated by the channel width indication information is greater than 160 MHz. A capability range of the number of space-time streams indicated by the space-time stream number indication information is smaller than or equal to 8.

The initiator performs transmission with the responder. Specifically, the initiator performs transmission with the responder by using at least either of a channel width not exceeding the channel width indicated by the OMI and the number of space-time streams not exceeding the number of space-time streams that is indicated by the OMI.

In this application, there may be a plurality of combination relationships between the channel width range indicated by the channel width indication information and the range of the number of space-time streams indicated by the space-time stream number indication information. For example:
The channel width range indicated by the channel width indication information is greater than 160 MHz. The range of the number of space-time streams indicated by the space-time stream number indication information is 1 to 8 (that the number of space-time streams is 1 to 8 can be indicated by enhanced space-time stream number indication information in this application, or space-time stream number indication information in the 802.11ax standard and a previous standard).

In an embodiment not claimed, the channel width range indicated by the channel width indication information is greater than or equal to 20 MHz and less than or equal to 160 MHz (that the channel width range is less than or equal to 160 MHz can be indicated by enhanced channel width indication information in this application, or channel width indication information in the 802.11ax standard and a previous standard). The range of the number of space-time streams indicated by the space-time stream number indication information is 1 to 16.

In an embodiment not claimed, the channel width range indicated by the channel width indication information is greater than or equal to 20 MHz and less than or equal to 160 MHz (that the channel width range is less than or equal to 160 MHz can be indicated by enhanced channel width indication information in this application, or channel width indication information in the 802.11ax standard and a previous standard). The range of the number of space-time streams indicated by the space-time stream number indication information is 1 to 8 (that the number of space-time streams is 1 to 8 can be indicated by enhanced space-time stream number indication information in this application, or space-time stream number indication information in the 802.11ax standard and a previous standard). Alternatively, the channel width range indicated by the channel width indication information is greater than 160 MHz. The range of the number of space-time streams indicated by the space-time stream number indication information is 1 to 16.

This is only an example, and there are other combinations. Details are not described herein again.

The OMI is carried in control information corresponding to a control subfield, and the control information includes a the channel width indication information and a space-time stream number indication information.

It should be understood that the capability range of the channel width indicated by the channel width indication information is a range of a maximum value of the channel width that can be indicated by the channel width indication information, but an actual channel width indicated by the channel width indication information may be less than the capability range of the channel width.

For example, the actual channel width indicated by the channel width indication information may be any one of 20 MHz, 40 MHz, 80 MHz, 160 MHz, 240 MHz, or 320 MHz, and the maximum value of the channel width is 320 MHz. In this application, it is indicated that the capability range of the channel width indicated by the channel width indication information is greater than 160 MHz.

It should be further understood that the channel width may be contiguous, or noncontiguous. For example, 320 MHz may be 160 MHz + 160 MHz. 240 MHz may be 80 MHz + 160 MHz or 160 MHz + 80 MHz.

It should be further understood that, with development of technologies, the capability range of the channel width that can be indicated by the channel width indication information provided in this application may alternatively be greater than 320 MHz, for example, 480 MHz, 640 MHz, 800 MHz, 960 MHz, 1120 MHz or 1280 MHz.

Likewise, the capability range of the number of space-time streams indicated by the space-time stream number indication information is a range of a maximum value of the number of space-time streams that can be indicated by the space-time stream number indication information, but an actual number of space-time streams indicated by the space-time stream number indication information may be less than the capability range of the number of space-time streams.

For example, the actual number of space-time streams indicated by the space-time stream number indication information is any one of 1, 2, 3, 4, 5, 6, 7, 8, 9, 10, 11, 12, 13, 14, 15, or 16, and the maximum value of the number of space-time streams is 16. In this application, it is indicated that the capability range of the number of space-time streams indicated by the space-time stream number indication information is greater than 8.

It should be further understood that, with development of technologies, the capability range of the space-time stream number indication information that can be indicated by the space-time stream number indication information provided in this application may alternatively be greater than 16, for example, 20, 24, 32, 48, or 64.

It should be further understood that the number of space-time streams in this application may also be replaced with the number of spatial streams.

It should be noted that, in the 802.11 ax standard, when space-time stream block coding (space-time block coding, STBC) is used, the number of space-time streams is twice the number of spatial streams. When the space-time stream block coding is not used, the two numbers are the same.

It should be understood that, in this application, the space-time stream number indication information may indicate the number of spatial streams, or the number of space-time streams, or partially indicate the number of space-time streams, and partially indicate the number of spatial streams.

For example, for a transmitter, the space-time stream number indication information indicates the number of transmitted space-time streams. For a receiver, the space-time stream number indication information indicates the number of received spatial streams. Alternatively, for the transmitter, the space-time stream number indication information indicates the number of received spatial streams. For the receiver, the space-time stream number indication information indicates the number of transmitted space-time streams. The space-time stream number indication information includes at least either of indication information of the number of transmitted space-time streams and indication information of the number of received space-time streams.

The space-time stream number indication information indicates both the number of transmitted space-time streams and the number of received space-time streams.

It should be understood that the initiator and the responder in this application are described from the perspective of an OM negotiation process. One that actively initiates OM negotiation is referred to as the initiator, and one that responds to the OM negotiation is referred to as the responder. The transmitter and the receiver are described from the perspective of a communications transmission process. A party that transmits data is the transmitter, and a party that receives the data is the receiver. The initiator for the OM negotiation may be the transmitter or the receiver for communications transmission. The responder for the OM negotiation may be the transmitter or the responder for communications transmission.

The foregoing descriptions are applicable to various designs and implementations of various aspects of this application. Details are not described subsequently.

In the first aspect of this application, the control subfield includes a first control subfield and a second control subfield.

The first control subfield is an OMI basic indication subfield, in other words, the first control subfield is a control subfield indicating OMI in the 802.11ax standard. The second control subfield is an OMI extension indication subfield, in other words, the second control subfield is a control subfield that is different from the control subfield indicating OMI in the 802.11ax standard. The first control subfield and the second control subfield jointly indicate an enhanced OMI.

It should be understood that, in comparison with a range that can be indicated by the OMI in the 802.11ax standard, the enhanced OMI can indicate a channel width in a greater range and more space-time streams.

In a possible implementation of the first design of the first aspect of this application, a value of a control identifier corresponding to the first control subfield is 1, and a value of a control identifier corresponding to the second control subfield is any one of 7 to 15.

In still another possible implementation of the first design of the first aspect of this application, the number of bits of first channel width indication information that is in control information corresponding to the first control subfield and that indicates a channel width is 2. The number of bits of second channel width indication information that is in control information corresponding to the second control subfield and that indicates a channel width is 1. A channel width range jointly indicated by the first channel width indication information and the second channel width indication information is 20 MHz to 320 MHz.

It should be understood that, with development of technologies, the channel width range jointly indicated by the first channel width indication information and the second channel width indication information may be greater, for example, 20 MHz to 640 MHz, or even 20 MHz to 1280 MHz. The number of bits of the second channel width indication information may remain 1, or increase to 2, 3, or the like accordingly.

In still another possible implementation of the first design of the first aspect of this application, a bit of the second channel width indication information is a least significant bit or a most significant bit in 3 bits formed by 2 bits of the first channel width indication information and 1 bit of the second channel width indication information.

In still another possible implementation of the first design of the first aspect of this application, the number of bits of first space-time stream number indication information that is in control information corresponding to the first control subfield and that indicates the number of space-time streams is 3. The number of bits of second space-time stream number indication information that is in control information corresponding to the second control subfield and that indicates the number of space-time streams is 1. A range of the number of space-time streams jointly indicated by the first space-time stream number indication information and the second space-time stream number indication information is 1 to 16.

It should be understood that, with development of technologies, the range of the number of space-time streams jointly indicated by the first space-time stream number indication information and the second space-time stream number indication information may be greater, for example, 1 to 32, or even 1 to 64. The number of bits of the second space-time stream number indication information may remain 1, or increase to 2, 3, or the like accordingly. In still another possible implementation of the first design of the first aspect of this application, 1 bit of the second space-time stream number indication information is a least significant bit or a most significant bit in 3 bits formed by 2 bits of the first space-time stream number indication information and 1 bit of the second space-time stream number indication information.

In still another possible implementation of the first design of the first aspect of this application, the number of space-time streams jointly indicated by the first space-time stream number indication information and the second space-time stream number indication information is less than or equal to the number of space-time streams of a preset channel width value.

The preset channel width value is 80 MHz or 160 MHz.

In still another possible implementation of the first design of the first aspect of this application, when the first channel width indication information and the second channel width indication information jointly indicate different channel widths, the first space-time stream number indication information and the second space-time stream number indication information jointly indicate a same number of space-time streams.

In the two control subfields provided in the first design of the first aspect of this application, based on the OMI basic indication subfield, the other control subfield is used as the OMI extension indication subfield. In this case, maximum compatibility with the 802.11ax standard is achieved, and OM negotiation on a greater channel width or more space-time streams is implemented at low overheads.

The foregoing describes how to implement enhanced OM negotiation by using the two control fields. OM negotiation in this application may also be implemented by using one control subfield, which is described in the following by using different implementations.

In a second design of the first aspect of this application, the control subfield is one control subfield, and is referred to as a third control subfield.

In the second design of this application, the OMI is carried in control information corresponding to the third control subfield. The control information includes at least either of third channel width indication information and third space-time stream number indication information.

In a possible implementation of the second design of this application, the third channel width indication information is 3 bits, and indicates a channel width range from 20 MHz to 320 MHz. The third space-time stream number indication information is 4 bits, and indicates that a range of the number of space-time streams is 1 to 16.

It should be understood that, the third channel width indication information may indicate a greater channel width range, for example, indicate 640 MHz. The third space-time stream number indication information may indicate a greater range of the number of space-time streams, for example, 1 to 32, or 1 to 64. Correspondingly, the number of bits of the third channel width indication information may increase as the width range increases, for example, may be 4 or 5. The number of bits of the third space-time stream number indication information may also increase as the range of the number of space-time streams increases, for example, may be 5 or 6.

In still another implementation of the second design of the first aspect of this application, the third control subfield is one control subfield located after a control subfield whose identifier value is 15. An identifier value of the third control subfield is any one of 0 to 15.

Optionally, the number of space-time streams indicated by the third space-time stream number indication information is less than or equal to the number of space-time streams of a preset channel width value.

The preset channel width value is 80 MHz or 160 MHz.

Optionally, when the third channel width indication information indicates different channel widths, the third space-time stream number indication information indicate a same number of space-time streams.

In this embodiment of this application, in the 802.11ax standard, the control subfield whose identifier value is 15 is used as an identifier point indicating the enhanced OMI. In this case, the responder for the OM negotiation may use the identifier point as an identifier, and identify a control subfield following the control subfield whose identifier value is 15 as an enhanced OM control subfield. This can support negotiation on a greater channel width and a greater number of space-time streams.

In still another possible implementation of the second design of the first aspect of this application, the third channel width indication information includes first channel width indication sub-information and second channel width indication sub-information. The first channel width indication sub-information is 2 bits. The second channel width indication sub-information is 1 bit. The first channel width indication sub-information and the second channel width indication sub-information jointly indicate a channel width.

In still another possible implementation of the second design of the first aspect of this application, the third space-time stream number indication information includes first space-time stream number indication sub-information and second space-time stream number indication sub-information. The first space-time stream number indication sub-information is 3 bits. The second space-time stream number indication sub-information is 1 bit. The first space-time stream number indication sub-information and the second space-time stream number indication sub-information jointly indicate the number of space-time streams.

In still another implementation of the second design of the first aspect of this application, an identifier value of the third control subfield is any one of 0 to 15. The identifier value corresponding to the third control subfield is 1. Optionally, the third control subfield may be one control subfield located after a control subfield whose identifier value is 15.

Optionally, when the first channel width indication information and the second channel width indication information jointly indicate different channel widths, the first space-time stream number indication information and the second space-time stream number indication information jointly indicate a same number of space-time streams.

Optionally, the number of space-time streams jointly indicated by the first space-time stream number indication sub-information and the second space-time stream number indication sub-information is less than or equal to the number of space-time streams of a preset channel width value.

The preset channel width value is 80 MHz or 160 MHz.

In this embodiment of this application, the channel width indication information or the space-time stream number indication information in the control subfield in the 802.11ax standard is carried in two indication subfields. This can implement the enhanced OM negotiation while ensuring maximum compatibility with the 802.11ax standard. In a third design of the first aspect of this application, the control subfield is one control subfield, and is referred to as a fourth control subfield.

In the third design of this application, the OMI is carried in control information corresponding to the fourth control subfield. The control information includes at least either of fourth channel width indication information and fourth space-time stream number indication information.

Optionally, the fourth channel width indication information is 2 bits, and indicates a channel width range from 20 MHz to 320 MHz. The fourth space-time stream number indication information is 3 bits, and indicates that a range of the number of space-time streams is 1 to 16.

In a possible implementation of the third design of the first aspect of this application, both the initiator and the responder support a standard after the 802.11 ax, and the number of space-time streams indicated by the fourth space-time stream number indication information is any value from 1 to 16. Optionally, the fourth space-time stream number indication information indicates any eight values from 1 to 16.

Alternatively, either of the initiator and the responder does not support a standard after the 802.11ax, and the number of space-time streams indicated by the fourth space-time stream number indication information is any value from 1 to 8.

In a possible implementation of the third design of the first aspect of this application, both the initiator and the responder support a standard after the 802.11 ax, and the channel width range indicated by the fourth channel width indication information is 20 MHz to 320 MHz.

Alternatively, either of the initiator and the responder does not support a standard after the 802.11ax, and a channel width range indicated by the fourth channel width indication information is 20 MHz to 160 MHz.

It should be understood that, the fourth channel width indication information may indicate a greater channel width range, for example, indicate 480 MHz, 640 MHz, 800 MHz, 960 MHz, 1120 MHz. The fourth space-time stream number indication information may indicate a greater range of the number of space-time streams, for example, 1 to 32, or 1 to 64. Specifically, the number of space-time streams is 20, 24, 32, 48, 64, or the like.

In a possible implementation of the third design of the first aspect of this application, the fourth channel width indication information indicates any one of the following four types:
a channel width of 20 MHz, a channel width of 40 MHz, a channel width of 80 MHz, and all supported within a capability range.

In still another possible implementation of the third design of the first aspect of this application, the number of space-time streams indicated by the fourth space-time stream number indication information is less than or equal to the number of space-time streams of a preset channel width value.

The preset channel width value is 80 MHz or 160 MHz.

In still another possible implementation of the third design of the first aspect of this application, when the fourth channel width indication information indicates different channel widths, the fourth space-time stream number indication information indicate a same number of space-time streams.

In this embodiment of this application, without increasing the number of bits of an existing control subfield, based on whether a standard after the 802.11ax is supported, same OMI information may be parsed into different definition. Therefore, the enhanced OM negotiation is implemented while ensuring the maximum compatibility with the 802.11ax standard at minimum overheads.

According to a second aspect according to the invention this application discloses negotiation method for an operating mode, applied to a responder for operating mode negotiation. The method includes the following steps. The responder receives an operating mode indication OMI from an initiator, where the OMI includes at least either of channel width indication information and space-time stream number indication information.

A capability range of a channel width indicated by the channel width indication information is greater than 160 MHz. A capability range of the number of space-time streams indicated by the space-time stream number indication information is greater than 8.

In an embodiment not claimed, a capability range of a channel width indicated by the channel width indication information is less than or equal to 160 MHz. A capability range of the number of space-time streams indicated by the space-time stream number indication information is greater than 8.

In an embodiment not claimed, a capability range of a channel width indicated by the channel width indication information is greater than 160 MHz. A capability range of the number of space-time streams indicated by the space-time stream number indication information is smaller than or equal to 8.

The responder performs transmission with the initiator based on the OMI.

The initiator performs transmission with the responder. Specifically, the responder performs transmission with the initiator by using at least either of a channel width not exceeding a channel width indicated by the OMI and the number of space-time streams not exceeding the number of space-time streams that is indicated by the OMI.

In the second aspect of this application, the control subfield includes a first control subfield and a second control subfield.

The first control subfield is an OMI basic indication subfield, in other words, the first control subfield is a control subfield indicating OMI in an 802.11ax standard. The second control subfield is an OMI extension indication subfield, in other words, the second control subfield is a control subfield that is different from the control subfield indicating OMI in the 802.11ax standard. The first control subfield and the second control subfield jointly indicate an enhanced OMI.

It should be understood that, in comparison with a range that can be indicated by the OMI in the 802.11ax standard, the enhanced OMI can indicate at least either of a channel width in a greater range and more space-time streams.

In a possible implementation of the first design of the second aspect of this application, a value of a control identifier corresponding to the first control subfield is 1, and a value of a control identifier corresponding to the second control subfield is any one of 7 to 15.

In still another possible implementation of the first design of the first aspect of this application, the number of bits of first channel width indication information that is in control information corresponding to the first control subfield and that indicates a channel width is 2. The number of bits of second channel width indication information that is in control information corresponding to the second control subfield and that indicates a channel width is 1. A channel width range jointly indicated by the first channel width indication information and the second channel width indication information is 20 MHz to 320 MHz.

The responder jointly parses first channel width indication information and second channel width indication information, to obtain an indicated channel width.

It should be understood that, with development of technologies, the channel width range jointly indicated by the first channel width indication information and the second channel width indication information may be greater, for example, 20 MHz to 640 MHz, or even 20 MHz to 1280 MHz. The number of bits of the second channel width indication information may remain 1, or increase to 2, 3, or the like accordingly.

In still another possible implementation of the first design of the second aspect of this application, a bit of the second channel width indication information is a least significant bit or a most significant bit in 3 bits formed by 2 bits of the first channel width indication information and 1 bit of the second channel width indication information. In still another possible implementation of the first design of the second aspect of this application, the number of bits of first space-time stream number indication information that is in the control information corresponding to the first control subfield and that indicates the number of space-time streams is 3. The number of bits of second space-time stream number indication information that is in control information corresponding to the second control subfield and that indicates the number of space-time streams is 1. A range of the number of space-time streams jointly indicated by the first space-time stream number indication information and the second space-time stream number indication information is 1 to 16.

It should be understood that, with development of technologies, the range of the number of space-time streams jointly indicated by the first space-time stream number indication information and the second space-time stream number indication information may be greater, for example, 1 to 32, or even 1 to 64. The number of bits of the second space-time stream number indication information may remain 1, or increase to 2, 3, or the like accordingly. The responder jointly parses first space-time stream number indication information and second space-time stream number indication information, to obtain an indicated number of space-time streams.

In still another possible implementation of the first design of the second aspect of this application, 1 bit of the second space-time stream number indication information is a least significant bit or a most significant bit in 3 bits formed by 2 bits of the first space-time stream number indication information and 1 bit of the second space-time stream number indication information.

In still another possible implementation of the first design of the second aspect of this application, the number of space-time streams jointly indicated by the first space-time stream number indication information and the second space-time stream number indication information is less than or equal to the number of space-time streams of a preset channel width value.

The preset channel width value is 80 MHz or 160 MHz.

In still another possible implementation of the first design of the second aspect of this application, when the first channel width indication information and the second channel width indication information jointly indicate different channel widths, the first space-time stream number indication information and the second space-time stream number indication information jointly indicate a same number of space-time streams.

In the two control subfields provided in the first design of the second aspect of this application, based on the OMI basic indication subfield, the other control subfield is used as the OMI extension indication subfield. In this case, maximum compatibility with the 802.11ax standard is achieved, and OM negotiation on a greater channel width or more space-time streams is implemented at low overheads.

The foregoing describes how to implement enhanced OM negotiation by using the two control fields. OM negotiation in this application may also be implemented by using one control subfield, which is described in the following by using different implementations.

In a second design of the second aspect of this application, the control subfield is one control subfield, and is referred to as a third control subfield.

In the second design of this application, the OMI is carried in control information corresponding to the third control subfield. The control information includes at least either of third channel width indication information and third space-time stream number indication information.

In a possible implementation of the second design of this application, the third channel width indication information is 3 bits, and indicates a channel width range from 20 MHz to 320 MHz. The third space-time stream number indication information is 4 bits, and indicates that a range of the number of space-time streams is 1 to 16.

It should be understood that, the third channel width indication information may indicate a greater channel width range, for example, indicate 640 MHz. The third space-time stream number indication information may indicate a greater range of the number of space-time streams, for example, 1 to 32, or 1 to 64. Correspondingly, the number of bits of the third channel width indication information may increase as the width range increases, for example, may be 4 or 5. The number of bits of the third space-time stream number indication information may also increase as the range of the number of space-time streams increases, for example, may be 5 or 6.

In still another implementation of the second design of the second aspect of this application, the third control subfield is one control subfield located after a control subfield whose identifier value is 15. The identifier value of the third control subfield is any one of 0 to 15.

Optionally, the number of space-time streams indicated by the third space-time stream number indication information is less than or equal to the number of space-time streams of a preset channel width value.

The preset channel width value is 80 MHz or 160 MHz.

Optionally, when the third channel width indication information indicates different channel widths, the third space-time stream number indication information indicate a same number of space-time streams.

In this embodiment of this application, in the 802.11ax standard, the control subfield whose identifier value is 15 is used as an identifier point indicating the enhanced OMI. In this case, the responder for the OM negotiation may use the identifier point as an identifier, and identify a control subfield following the control subfield whose identifier value is 15 as an enhanced OM control subfield. This can support negotiation on a greater channel width and a greater number of space-time streams.

In still another possible implementation of the second design of the second aspect of this application, the third channel width indication information includes first channel width indication sub-information and second channel width indication sub-information. The first channel width indication sub-information is 2 bits. The second channel width indication sub-information is 1 bit. The first channel width indication sub-information and the second channel width indication sub-information jointly indicate a channel width.

The responder jointly parses first channel width indication sub-information and second channel width indication sub-information, to obtain an indicated channel width.

In still another possible implementation of the second design of the second aspect of this application, the third space-time stream number indication information includes first space-time stream number indication sub-information and second space-time stream number indication sub-information. The first space-time stream number indication sub-information is 3 bits. The second space-time stream number indication sub-information is 1 bit. The first space-time stream number indication sub-information and the second space-time stream number indication sub-information jointly indicate the number of space-time streams.

The responder jointly parses the first space-time stream number indication sub-information and the second space-time stream number indication sub-information, to obtain an indicated number of space-time streams.

In still another implementation of the second design of the second aspect of this application, an identifier value of the third control subfield is any one of 0 to 15. The identifier value corresponding to the third control subfield is 1. Optionally, the third control subfield may be one control subfield located after a control subfield whose identifier value is 15.

Optionally, when the first channel width indication information and the second channel width indication information jointly indicate different channel widths, the first space-time stream number indication information and the second space-time stream number indication information jointly indicate a same number of space-time streams. Optionally, the number of space-time streams jointly indicated by the first space-time stream number indication sub-information and the second space-time stream number indication sub-information is less than or equal to the number of space-time streams of a preset channel width value.

The preset channel width value is 80 MHz or 160 MHz.

In this embodiment of this application, the channel width indication information or the space-time stream number indication information in the control subfield in the 802.11ax standard is carried in two indication subfields. This can implement the enhanced OM negotiation while ensuring maximum compatibility with the 802.11ax standard. In a third design of the second aspect of this application, the control subfield is one control subfield, and is referred to as a fourth control subfield.

In the third design of this application, the OMI is carried in control information corresponding to the fourth control subfield. The control information includes at least either of fourth channel width indication information and fourth space-time stream number indication information.

Optionally, the fourth channel width indication information is 2 bits, and indicates a channel width range from 20 MHz to 320 MHz. The fourth space-time stream number indication information is 3 bits, and indicates that a range of the number of space-time streams is 1 to 16.

In a possible implementation of the third design of the second aspect of this application, the responder supports a standard after the 802.11ax, and the number of space-time streams indicated by the fourth space-time stream number indication information is any value from 1 to 16. Optionally, the fourth space-time stream number indication information indicates any eight values from 1 to 16.

Alternatively, the responder does not support a standard after the 802.11ax, and the number of space-time streams indicated by the fourth space-time stream number indication information is any value from 1 to 8.

In a possible implementation of the third design of the second aspect of this application, the responder supports a standard after the 802.11ax, and the channel width range indicated by the fourth channel width indication information is 20 MHz to 320 MHz.

Alternatively, the responder does not support a standard after the 802.11ax, and a channel width range indicated by the fourth channel width indication information is 20 MHz to 160 MHz.

It should be understood that, the fourth channel width indication information may indicate a greater channel width range, for example, indicate 480 MHz, 640 MHz, 800 MHz, 960 MHz, 1120 MHz. The fourth space-time stream number indication information may indicate a greater range of the number of space-time streams, for example, 1 to 32, or 1 to 64. Specifically, the number of space-time streams is 20, 24, 32, 48, 64, or the like.

In a possible implementation of the third design of the second aspect of this application, the fourth channel width indication information indicates any one of the following four types:
a channel width of 20 MHz, a channel width of 40 MHz, a channel width of 80 MHz, and all supported within a capability range.

In still another possible implementation of the third design of the second aspect of this application, the number of space-time streams indicated by the fourth space-time stream number indication information is less than or equal to the number of space-time streams of a preset channel width value.

The preset channel width value is 80 MHz or 160 MHz.

In still another possible implementation of the third design of the second aspect of this application, when the fourth channel width indication information indicates different channel widths, the fourth space-time stream number indication information indicate a same number of space-time streams.

In this embodiment of this application, without increasing the number of bits of an existing control subfield, based on whether a standard after the 802.11ax is supported, same OMI information may be parsed into different definition. Therefore, the enhanced OM negotiation is implemented while ensuring the maximum compatibility with the 802.11ax standard at minimum overheads.

According to a third aspect according to the invention, this application provides a communications apparatus. As an initiator for operating mode negotiation, the communications apparatus has some or all functions of implementing the method examples in the first aspect. For example, functions of the communications apparatus may have some or all functions of embodiments of this application, or may have a function of independently implementing any embodiment in this application. The functions may be implemented by hardware, or may be implemented by hardware by executing corresponding software. The hardware or the software includes one or more units or modules corresponding to the functions.

In a possible design of the third aspect, a structure of the communications apparatus may include a processing unit and a communications unit. The processing unit is configured to support the initiator to perform a corresponding function in the foregoing method. The communications unit is configured to support communications between the initiator and another device. The initiator may further include a storage unit. The storage unit is configured to be coupled to the processing unit and a sending unit, and the storage unit stores program instructions and data that are necessary for the communications apparatus.

In an implementation, the communications apparatus includes:
a communications unit, configured to send an operating mode indication OMI to a responder. The OMI includes at least either of channel width indication information and space-time stream number indication information.

A capability range of a channel width indicated by the channel width indication information is greater than 160 MHz. A capability range of the number of space-time streams indicated by the space-time stream number indication information is greater than 8.

Alternatively, a capability range of a channel width indicated by the channel width indication information is less than or equal to 160 MHz. A capability range of the number of space-time streams indicated by the space-time stream number indication information is greater than 8.

Alternatively, a capability range of a channel width indicated by the channel width indication information is greater than 160 MHz. A capability range of the number of space-time streams indicated by the space-time stream number indication information is smaller than or equal to 8.

Optionally, the communications apparatus further includes a processing unit, configured to perform transmission with the responder.

For example, the processing unit may be a processor, the communications unit may be a transceiver or a communications interface, and the storage unit may be a memory.

In an implementation, the communications apparatus includes:
a transceiver, configured to send an operating mode indication OMI to a responder. The OMI includes at least either of channel width indication information and space-time stream number indication information.

A capability range of a channel width indicated by the channel width indication information is greater than 160 MHz. A capability range of the number of space-time streams indicated by the space-time stream number indication information is greater than 8.

Alternatively, a capability range of a channel width indicated by the channel width indication information is less than or equal to 160 MHz. A capability range of the number of space-time streams indicated by the space-time stream number indication information is greater than 8.

Alternatively, a capability range of a channel width indicated by the channel width indication information is greater than 160 MHz. A capability range of the number of space-time streams indicated by the space-time stream number indication information is maller than or equal to 8.

Optionally, the communications apparatus further includes a processor, configured to perform transmission with the responder.

According to a fourth aspect according to the invention, this application provides a communications apparatus. As a responder for operating mode negotiation, the communications apparatus has some or all functions of implementing the method examples in the second aspect. For example, functions of the communications apparatus may have some or all functions of embodiments of this application, or may have a function of independently implementing any embodiment in this application. The functions may be implemented by hardware, or may be implemented by hardware by executing corresponding software. The hardware or the software includes one or more units or modules corresponding to the functions.

In a possible design of the fourth aspect, a structure of the communications apparatus may include a processing unit and a communications unit. The processing unit is configured to support the initiator to perform a corresponding function in the foregoing method. The communications unit is configured to support communications between the initiator and another device. The initiator may further include a storage unit. The storage unit is configured to be coupled to the processing unit and a sending unit, and the storage unit stores program instructions and data that are necessary for the communications apparatus.

In an implementation, the communications apparatus includes:
a communications unit, configured to receive an operating mode indication OMI from an initiator, where the OMI includes at least either of channel width indication information and space-time stream number indication information, a capability range of a channel width indicated by the channel width indication information is greater than 160 MHz, and a capability range of the number of space-time streams indicated by the space-time stream number indication information is greater than 8; and
optionally, the communications apparatus further includes a processing unit, configured to perform transmission with the initiator based on the OMI.

For example, the processing unit may be a processor, the communications unit may be a transceiver or a communications interface, and the storage unit may be a memory.

In an implementation, the communications apparatus includes:
a transceiver, configured to receive an operating mode indication OMI from an initiator. The OMI includes at least either of channel width indication information and space-time stream number indication information. A capability range of a channel width indicated by the channel width indication information is greater than 160 MHz. A capability range of the number of space-time streams indicated by the space-time stream number indication information is greater than 8.

Optionally, the communications apparatus further includes a processor, configured to perform transmission with the initiator based on the OMI.

It should be understood that the communications apparatus in this application may serve as the initiator and the responder for OM negotiation. From the perspective of an OM negotiation process, one that actively initiates OM negotiation is referred to as the initiator, and one that responds to the OM negotiation is referred to as the responder. The transmitter and the receiver are described from the perspective of a transmission process. A party that transmits data is the transmitter, and a party that receives the data is the receiver. The initiator for the OM negotiation may be the transmitter or the receiver for communications transmission. The responder for the OM negotiation may be the transmitter or the responder for communications transmission.

It should be understood that the communications apparatus in this application may be an access point (access point, AP) station, or a non-access point (non-access point station, non-AP STA) station.

An access point or a station in this application may be a multi-link device (multi-link device, MLD).

In a specific implementation process of the communications apparatuses provided in the third aspect and the fourth aspect, the processor may be configured to perform, for example, but not limited to, baseband-related processing, and the transceiver may be configured to perform, for example, but not limited to, radio frequency transmission. The foregoing components may be separately disposed on chips that are independent of each other, or at least a part or all of the components may be disposed on a same chip. For example, the processor may further be divided into an analog baseband processor and a digital baseband processor. The analog baseband processor and the transceiver may be integrated on a same chip, and the digital baseband processor may be disposed on an independent chip. With continuous development of integrated circuit technologies, more components can be integrated on a same chip. For example, the digital baseband processor and a plurality of application processors (for example, but not limited to, a graphics processor and a multimedia processor) may be integrated on a same chip. The chip may be referred to as a system on chip (system on chip). Whether all the components are separately disposed on different chips or integrated and disposed on one or more chips usually depends on a specific requirement for a product design.

A specific implementation form of the foregoing components is not limited in this embodiment of the present invention.

According to a fifth aspect not claimed, this application further provides a processor, configured to perform the method in the first aspect or the second aspect. In a process of performing these methods, a process of sending the foregoing information and a process of receiving the foregoing information in the foregoing methods may be understood as a process of outputting the foregoing information by the processor and a process of receiving the foregoing input information by the processor. Specifically, when outputting the information, the processor outputs the information to a transceiver, so that the transceiver transmits the information. Still further, after the information is output by the processor, other processing may further need to be performed on the information before the information arrives at the transceiver. Similarly, when the processor receives the input information, the transceiver receives the information and inputs the information into the processor. Still further, after the transceiver receives the information, other processing may need to be performed on the information before the information is input into the processor.

Based on the foregoing principle, for example, the receiving the OMI mentioned in the foregoing method may be understood as inputting the OMI by the processor. For another example, transmitting the OMI may be understood as outputting the OMI by the processor.

In this case, for operations such as transmission, sending, and receiving related to the processor, if there is no particular statement, or if the operations do not contradict an actual function or internal logic of the operations in related descriptions, the operations may be more generally understood as operations such as output, receiving, and input of the processor, instead of operations such as transmission, sending, and receiving directly performed by a radio frequency circuit and an antenna.

In a specific implementation process, the processor may be a processor specially configured to perform these methods, or a processor, for example, a general-purpose processor, that executes computer instructions in a memory to perform these methods. The memory may be a non-transitory (non-transitory) memory such as a read-only memory (read only memory, ROM). The memory and the processor may be integrated on a same chip, or may be separately disposed on different chips. A type of the memory and a manner of disposing the memory and the processor are not limited in embodiments of the present invention.

According to a sixth aspect according to the invention, an embodiment of the present invention provides a computer-readable storage medium, configured to store a computer program used by the foregoing communications apparatus, including a computer program used to perform the first aspect or the second aspect of the foregoing method. According to a seventh aspect, this application further provides a computer program product including a computer program. When the computer program product runs on a computer, the computer is enabled to perform the method according to the first aspect or the second aspect.

According to an eighth aspect not claimed, this application provides a chip system. The chip system includes a processor and an interface, configured to support a communications transmission device in implementing a function in the first aspect or the second aspect, for example, determining or processing at least either of data and information in the foregoing method. In a possible design, the chip system further includes a memory, and the memory is configured to store information and data that are necessary for the foregoing communications apparatus. The chip system may include a chip, or may include a chip and another discrete component.

According to a ninth aspect not claimed, this application provides a functional entity. The functional entity is configured to implement the method according to the first aspect or the second aspect.

### BRIEF DESCRIPTION OF DRAWINGS

FIG. 1 is a schematic diagram of a structure of a network system according to an embodiment of this application;
FIG. 2 is a schematic diagram of a structure of a communications apparatus according to an embodiment of this application;
FIG. 3 is a schematic diagram of a structure of a chip system according to an embodiment of this application;
FIG. 4 is a schematic diagram of a structure of a MAC frame according to an embodiment of this application;
FIG. 5 is a schematic diagram of a structure of an A-control field in an 802.11ax standard according to an embodiment of this application;
FIG. 6 is a schematic diagram of a structure of a control subfield in an 802.11ax standard according to an embodiment of this application;
FIG. 7 is a schematic diagram of a structure of a control subfield according to an embodiment of this application;
FIG. 8 is a schematic diagram of a structure of another control subfield according to an embodiment of this application;
FIG. 9 is a schematic diagram of a structure of still another control subfield according to an embodiment of this application;
FIG. 10 is a schematic diagram of a structure of still another control subfield according to an embodiment of this application; and
FIG. 11 is a schematic diagram of a structure of still another control subfield according to an embodiment of this application.

In the following description, features which in the above summary of the invention have been marked as "not claimed" are also hereinafter, when they are described and explained with reference to the drawings, to be understood as "not claimed" or "not part of the invention".

### DESCRIPTION OF EMBODIMENTS

The following further describes specific embodiments of this application in detail with reference to accompanying drawings.

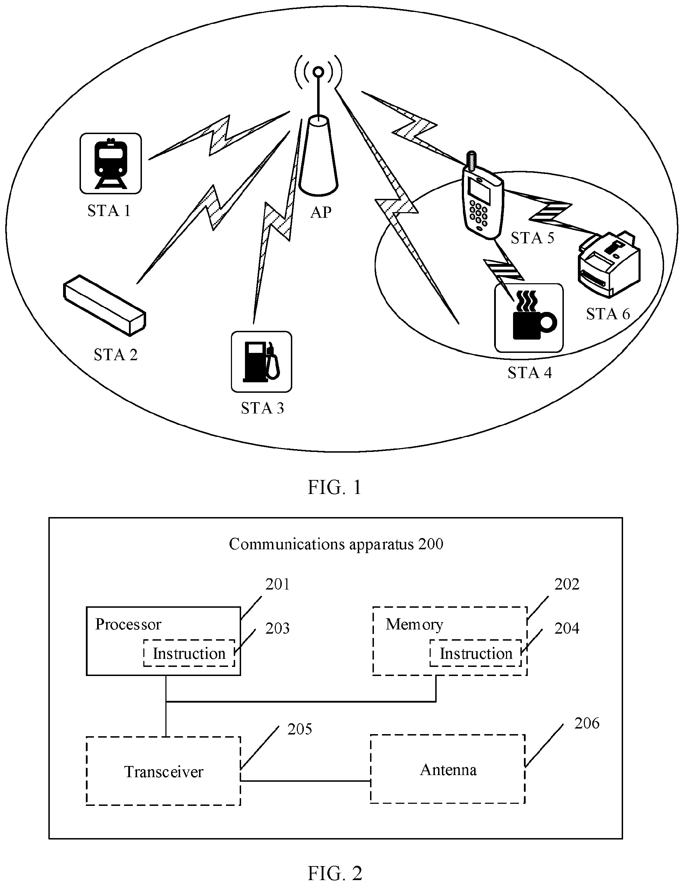

FIG. 1 is used as an example to describe a network structure to which the OM negotiation method in this application is applicable.

FIG. 1 is a schematic diagram of a network structure according to an embodiment of this application. The network structure may include one or more access points (access point, AP) stations and one or more non-access-point stations (non-access point station, non-AP STA). For ease of description, an access point station is referred to as an access point (AP), and a non-access point station is referred to as a station (STA) in this specification.

In embodiments of this application, both the AP and the STA may serve as an initiator and a responder for OM negotiation. The initiator and the responder for the OM negotiation are described from the perspective of an OM negotiation process. One that actively initiates OM negotiation is referred to as the initiator, and one that responds to the OM negotiation is referred to as the responder. A transmitter and a receiver are described from the perspective of a transmission process. A party that transmits data is the transmitter, and a party that receives the data is the receiver. The initiator for the OM negotiation may be the transmitter or the receiver for communications transmission. The responder for the OM negotiation may be the transmitter or the responder for communications transmission.

The network structure including one AP and six stations (a STA 1, a STA 2, a STA 3, a STA 4, a STA 5, and a STA 6) in FIG. 1 is used as an example for description.

For example, in the OM negotiation process, the AP serves as the initiator for the OM negotiation, and the STA 1 or the STA 2 serves as the responder for the OM negotiation.

Alternatively, the AP serves as the initiator for the OM negotiation, and another AP serves as the responder for the OM negotiation.

Alternatively, the STA 1 serves as the initiator for the OM negotiation, and the STA 2 serves as the responder for the OM negotiation.

In the communications transmission process, both the initiator and the responder for OM negotiation may be used as transmitters or receivers for communications transmission. This is not limited in this application.

In embodiments of this application, the access point may be an access point for a terminal device (such as a mobile phone) to access a wired (or wireless) network, and is mainly deployed in a home, a building, and a park. A typical coverage radius is tens of meters to hundreds of meters. Certainly, the network device may alternatively be deployed outdoors. The access point is equivalent to a bridge that connects the wired network and the wireless network. A main function of the access point is to connect various wireless network clients together and then connect the wireless network to the Ethernet. Specifically, the access point may be a terminal device (such as a mobile phone) or a network device (such as a router) with a wireless fidelity (wireless fidelity, Wi-Fi) chip. The access point may be a device that supports the 802.11be standard. Alternatively, the access point may be a device that supports a plurality of wireless local area network (wireless local area network, WLAN) standards of the 802.11 family such as the 802.11be standard, the 802.11ax standard, the 802.11ac standard, the 802.11n standard, the 802.11g standard, the 802.11b standard, and the 802.11a standard. The access point in this application may be an HE-AP or an EHT-AP, or may be an access point applicable to a future-generation Wi-Fi standard.

The station may be a wireless communications chip, a wireless sensor, a wireless communications terminal, or the like, and may also be referred to as a user. For example, the station may be a mobile phone supporting a Wi-Fi communications function, a tablet computer supporting a Wi-Fi communications function, a set-top box supporting a Wi-Fi communications function, a smart television supporting a Wi-Fi communications function, an intelligent wearable device supporting a Wi-Fi communications function, a vehicle-mounted communications device supporting a Wi-Fi communications function, or a computer supporting a Wi-Fi communications function. Optionally, the station may support the 802.11be standard. The station may also support a plurality of WLAN standards of the 802.11 family such as 802.11be, 802.11ax, 802.11ac, 802.11n, 802.11g, 802.11b, and 802.11a.

The access point in this embodiment of this application may be an HE-STA or an EHT-STA, or may be a STA applicable to a future-generation Wi-Fi standard.

For example, the access point and the station may be devices used in the Internet of vehicles, Internet of things nodes or sensors in the Internet of things (Internet of things, IoT), smart cameras, smart remote controls, and smart water meters in a smart home, and sensors in a smart city.

It should be noted that an AP station and a non-AP station in this application may alternatively be wireless communications devices that support parallel transmission on a plurality of links, for example, referred to as multi-link devices (multi-link devices) or multi-band devices (multi-band devices). Compared with a device that supports only single-link transmission, the multi-link device has higher transmission efficiency and a higher throughput.

The multi-link device includes one or more affiliated stations STAs (affiliated STA). The affiliated STA is a logical station and may operate on one link.

Although embodiments of this application are mainly described by using a network deployed based on IEEE 802.11 as an example, a person skilled in the art easily understands that various aspects of this application may be extended to other networks using various standards or protocols such as Bluetooth (Bluetooth), a high performance radio LAN (high performance radio LAN, HIPERLAN) (a wireless standard similar to the IEEE 802.11 standard and mainly used in Europe), a wide area network (WAN), a wireless local area network (wireless local area network, WLAN), a personal area network (personal area network, PAN), or other networks currently known or later developed. Therefore, the various aspects provided in this application are applicable to any suitable wireless network regardless of coverage and a wireless access protocol.

The initiator and the responder for the OM negotiation in embodiments of this application may also be collectively referred to as a communications apparatus. The communications apparatus may include a hardware structure and a software module, and the foregoing functions are implemented in a form of a hardware structure, a software module, or a combination of the hardware structure and the software module. A function in the foregoing functions may be implemented in a form of a hardware structure, a software module, or a combination of the hardware structure and the software module.

FIG. 2 is a schematic diagram of a structure of a communications apparatus according to an embodiment of this application. As shown in FIG. 2, the communications apparatus 200 may include a processor 201 and a transceiver 205, and optionally further includes a memory 202.

The transceiver 205 may be referred to as a transceiver unit, a transceiver machine, a transceiver circuit, or the like, and is configured to implement a transceiver function. The transceiver 205 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The memory 202 may store a computer program, software code, or instructions 204, where the computer program, the software code, or the instructions 204 may further be referred to as firmware. The processor 201 may control a MAC layer and a PHY layer by running a computer program, software code, or instructions 203 in the processor 201, or by invoking the computer program, the software code, or the instructions 204 stored in the memory 202, to implement an OM negotiation method provided in the following embodiments of this application. The processor 201 may be a central processing unit (central processing unit, CPU), and the memory 302 may be, for example, a read-only memory (read-only memory, ROM), or a random access memory (random access memory, RAM).

The processor 201 and the transceiver 205 described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The communications apparatus 200 may further include an antenna 206. The modules included in the communications apparatus 200 are merely examples for description, and are not limited in this application.

As described above, the communications apparatus described in the foregoing embodiment may be an access point or a station. However, a scope of the communications apparatus described in this application is not limited thereto, and the structure of the communications apparatus may not be limited in FIG. 2. The communications apparatus may be an independent device or may be a part of a larger device. For example, the communications apparatus may be implemented in the following form:
(1) an independent integrated circuit (IC), a chip, a chip system, or a subsystem; (2) a set including one or more ICs, where optionally, the set of ICs may also include a storage component for storing data and instructions; (3) a module that can be embedded in other devices; (4) a receiver, an intelligent terminal, a wireless device, a handheld device, a mobile unit, a vehicle-mounted device, a cloud device, an artificial intelligence device, or the like; or (5) others.

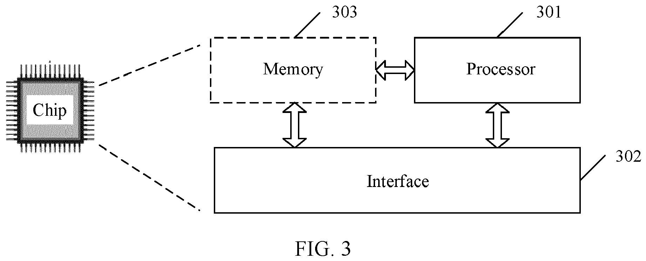

For the communications apparatus implemented in the form of the chip or the chip system, refer to a schematic diagram of a structure of a chip shown in FIG. 3. The chip shown in FIG. 3 includes a processor 301 and an interface 302. There may be one or more processors 301, and there may be a plurality of interfaces 302. Optionally, the chip or the chip system may include a memory 303.

Embodiments of this application do not limit the protection scope and applicability of the claims. A person skilled in the art may adaptively change functions and deployments of elements in this application, or omit, replace, or add various processes or components as appropriate without departing from the scope of embodiments of this application.

With reference to the network system shown in FIG. 1 and the structures of the communications apparatus shown in FIG. 2 and FIG. 3, the following describes a technical solution of how to implement, as the initiator and the responder for the OM negotiation in the network system, OM negotiation provided in this application.

For ease of understanding related content in embodiments of this application, the following describes some concepts related to embodiments of this application.

### 1. OM negotiation

As described above, during or before a communications transmission process, one initiator (Initiator) that wants to change an operating mode (OM) transmits, to the responder (Responder), a MAC frame carrying a control subfield with an OMI to perform OM negotiation. After the OM negotiation is completed, the initiator and the responder perform transmission based on a negotiated OM. The OM usually includes channel width information or space-time stream number information.

### 2. MAC frame

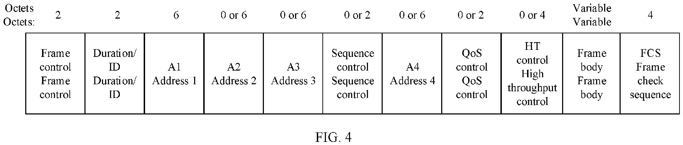

In a WLAN, the access point (Access Point, AP) and the station (Station, STA) transmit control signaling, management signaling, or data by using a medium access control (Medium Access Control, MAC for short) protocol data unit (MAC Protocol Data Unit, MPDU for short) or a MAC frame for short. A MAC frame format in the 802.11 standard is shown in FIG. 4.

### 3. Control subfield

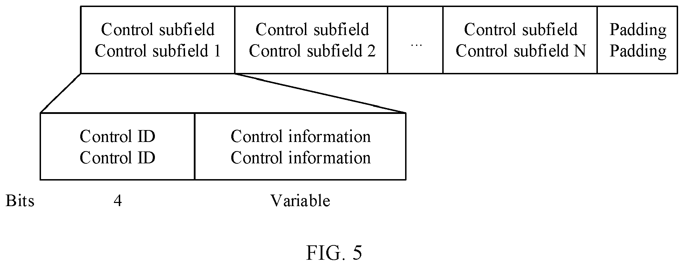

A control subfield is in a high throughput control field in a MAC header. The transmitter may transmit some control information by using the control subfield. With a structure of one or more control identifiers plus control information, an aggregated control (Aggregated Control, A-control) subfield in a high efficient variant (currently including three forms: a high throughput variant, a very high throughput variant, and a high efficient variant) of a high throughput control field may carry 1 to N pieces of control information. A structure of the A-control subfield is shown in FIG. 5. A control identifier indicates a type of control information. Currently, types of control subfields supported by 802.11ax are shown in Table 2.

**Table 2 Type of a currently supported control subfield**

| Controller ID | Definition | Length of a control information subfield |
|---|---|---|
| 0 | Triggered response scheduling | 26 |
| 1 | Operating mode | 12 |
| 2 | High efficiency link adaptation | 26 |
| 3 | Cache status reporting | 26 |
| 4 | Uplink power headroom (headroom) | 8 |
| 5 | Channel width query report | 10 |
| 6 | Command and status | 8 |
| 7 to 14 | Reserved | |
| 15 | All-one sequence for extension | 26 |

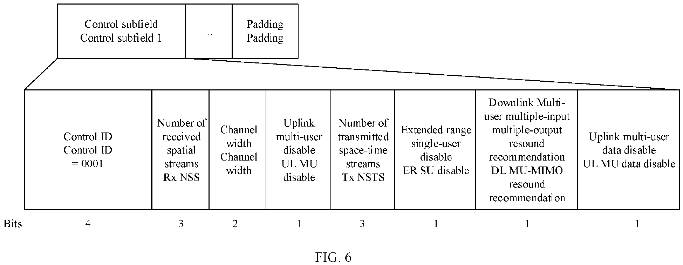

When a control identifier (control ID) of a control subfield is 0001, the control subfield corresponds to a control subfield indicating an OM in the 802.11ax standard, and a composition structure of the control subfield is shown in FIG. 6. Control information corresponding to the control subfield includes information such as the number of received spatial streams (receiver number of spatial streams, Rx NSS), channel width (channel width, CW), uplink multi-user disable (UL MU disable), the number of transmitted space-time streams (transmit number of spatial streams and time streams, Tx NSTS), extended range single-user disable (ER SU disable), downlink multi-user multiple-input multiple-output resound recommendation (DL MU-MIMO resound recommendation), and uplink multi-user data disable (UL MU Data disable).

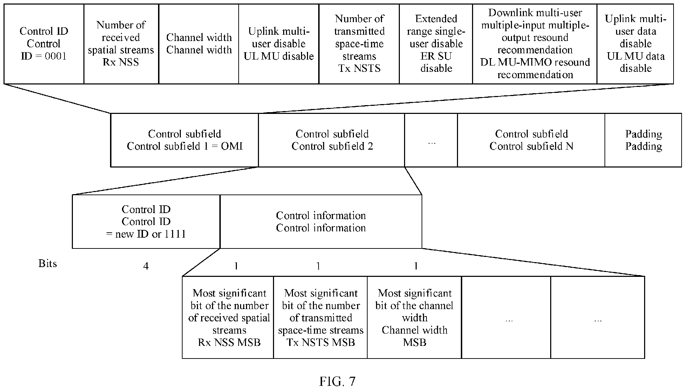

In subsequent embodiments of this application, as for the control subfield (control subfield), the control subfield is shown as two parts: control identifiers (control IDs) and control information (control information), and the control subfield then specifically indicates various information in the control information, for example, as shown in FIG. 7. Alternatively, for brevity, the control subfield (control subfield) is simply shown as including a control identifier (control ID) and various specific control information, in other words, an indication for the control information (control information) is omitted, for example, as shown in FIG. 6.

### 4. Channel width and number of spatial streams/number of space-time streams

The OMI in embodiments of this application mainly indicates the channel width and the number of space-time streams in the OMI.

The channel width is used to indicate a channel width of a PPDU that can be transmitted or received by the initiator for the OM (width is jointly indicated for transmitting and receiving).

The number of received space-time streams is used to indicate the number of space-time streams of a received physical layer protocol data unit (PHY Protocol Data Unit, PPDU) supported by the initiator for the OM, and is less than or equal to a maximum number of space-time streams supported by the initiator for the OM. In other words, the number of received space-time streams acts as a limit when the initiator serves as a receiver during data transmission, and acts as a limit on the number of space-time streams of data transmitted by the transmitter on the other side. The number of received or transmitted space-time streams cannot exceed a capability range limited by the number of received space-time streams.

The number of transmitted space-time streams is used to indicate the number of space-time streams of a PPDU that can be transmitted by the initiator for the OM. In other words, the number of transmitted space-time streams acts as a limit when the initiator serves as a transmitter during the data transmission. The number of transmitted space-time streams cannot exceed a capability range limited by the number of transmitted space-time streams during data transmission.

It should be noted that space-time block coding (Space-Time Block Coding, STBC) is considered in the number of space-time streams. For the 802.11ax standard, when STBC is used, the number of space-time streams is twice the number of spatial streams. When STBC is not used, the two numbers are the same. The two numbers are not distinguished in embodiments of this application. In descriptions, if not specified, the two numbers are usually represented by the number of space-time streams. It should be understood that, in this application, the space-time stream number indication information may indicate the number of spatial streams, or the number of space-time streams, or partially indicate the number of space-time streams, and partially indicate the number of spatial streams. For example, for a transmitter, the space-time stream number indication information indicates the number of transmitted space-time streams. For a receiver, the space-time stream number indication information indicates the number of received spatial streams. Alternatively, for a transmitter, the space-time stream number indication information indicates the number of received spatial streams. For a receiver, the space-time stream number indication information indicates the number of transmitted space-time streams.

It should be noted that, in embodiments of this application, a technical solution of OM negotiation different from the 802.11ax standard may be implemented by extending some control subfields or related control information in a MAC frame in the 802.11ax standard, or adding control subfields.

With reference to accompanying drawings and the foregoing related concept descriptions, the following further describes related content of the OM negotiation method in the network system shown in FIG. 1 implemented by the initiator and the responder for the OM negotiation provided in this application.

The technical solution of the OM negotiation provided in embodiments of this application is as follows:
The initiator sends an operating mode indication OMI to the responder. The OMI includes at least either of channel width indication information and space-time stream number indication information.

A capability range of a channel width indicated by the channel width indication information is greater than 160 MHz. A capability range of the number of space-time streams indicated by the space-time stream number indication information is greater than 8.

Alternatively, a capability range of a channel width indicated by the channel width indication information is less than or equal to 160 MHz. A capability range of the number of space-time streams indicated by the space-time stream number indication information is greater than 8.

Alternatively, a capability range of a channel width indicated by the channel width indication information is greater than 160 MHz. A capability range of the number of space-time streams indicated by the space-time stream number indication information is smaller than or equal to 8.

In other words, in this application, when the OMI includes the channel width indication information and the space-time stream number indication information, there may be a plurality of combination relationships between the channel width range indicated by the channel width indication information and the range of the number of space-time streams indicated by the space-time stream number indication information. For example:
The channel width range indicated by the channel width indication information is greater than 160 MHz. However, the range of the number of space-time streams indicated by the space-time stream number indication information is 1 to 8 (that the number of space-time streams is 1 to 8 can be indicated by enhanced space-time stream number indication information in this application, or space-time stream number indication information in the 802.11ax standard and a previous standard).

Alternatively, the channel width range indicated by the channel width indication information is greater than or equal to 20 MHz and less than or equal to 160 MHz (that the channel width range is less than or equal to 160 MHz can be indicated by enhanced channel width indication information in this application, or channel width indication information in the 802.11ax standard and a previous standard). The range of the number of space-time streams indicated by the space-time stream number indication information is 1 to 16.

Alternatively, the channel width range indicated by the channel width indication information is greater than or equal to 20 MHz and less than or equal to 160 MHz (that the channel width range is less than or equal to 160 MHz can be indicated by enhanced channel width indication information in this application, or channel width indication information in the 802.11ax standard and a previous standard). The range of the number of space-time streams indicated by the space-time stream number indication information is 1 to 8 (that the number of space-time streams is 1 to 8 can be indicated by enhanced space-time stream number indication information in this application, or space-time stream number indication information in the 802.11ax standard and a previous standard).

Alternatively, the channel width range indicated by the channel width indication information is greater than 160 MHz. The range of the number of space-time streams indicated by the space-time stream number indication information is 1 to 16.

The responder sends an acknowledgment message to the initiator. After receiving the acknowledgment message, the initiator performs transmission with the responder.

Specifically, for a channel width indicated by the OMI, the initiator and the responder perform data transmission within a range not exceeding the channel width indicated by the channel width indication information.

For the number of space-time streams indicated by the OMI, the number of received space-time streams is used to indicate the number of space-time streams of a received PPDU supported by the initiator for the OM, and is less than or equal to a maximum number of space-time streams supported by the initiator for the OM. In other words, the number of received space-time streams acts as a limit when the initiator serves as a receiver during data transmission, and acts as a limit on the number of space-time streams of data transmitted by the transmitter on the other side. The number of received or transmitted space-time streams cannot exceed a capability range limited by the number of received space-time streams.

The number of transmitted space-time streams is used to indicate the number of space-time streams of a PPDU that can be transmitted by the initiator for the OM. In other words, the number of transmitted space-time streams acts as a limit when the initiator serves as a transmitter during the data transmission. The number of transmitted space-time streams cannot exceed a capability range limited by the number of transmitted space-time streams during the data transmission. As described above, a technical solution of the enhanced OM negotiation provided in this embodiment of this application is mainly implemented based on control information carried in the MAC frame. In a possible implementation, this technical solution is implemented by using a control subfield, in other words, the OMI is carried in control information corresponding to a control subfield. The control information includes at least either of the channel width indication information and the space-time stream number indication information. Certainly, in embodiments of this application, another subfield of the MAC frame may be used to implement the enhanced OM negotiation.

The control subfield is used to implement the enhanced OM negotiation in the following two modes:
First, the technical solution of the enhanced OM negotiation is implemented by using a control subfield provided in an existing 802.11ax standard as a basic indication subfield, and adding a new extension indication subfield. Second, the technical solution of the enhanced OM negotiation is implemented by extending OM information that can be indicated by the control subfield.

It should be understood that the enhanced OM negotiation in this embodiment of this application is described from the perspective of comparing with a capability range of OM negotiation supported by the 802.11ax. Specifically, a capability range of a channel width of the enhanced OM negotiation may be greater than 160 MHz, and a capability range of the number of space-time streams of the enhanced OM negotiation may be greater than 8.

Without loss of generality, the capability range of the channel width indicated by the channel width indication information in embodiments of this application is a range of a maximum value of the channel width that can be indicated by the channel width indication information, but an actual channel width indicated by the channel width indication information may be less than the capability range of the channel width.

For example, the actual channel width indicated by the channel width indication information may be any one of 20 MHz, 40 MHz, 80 MHz, 160 MHz, 240 MHz, or 320 MHz, and the maximum value of the channel width is 320 MHz. In this application, it is indicated that the capability range of the channel width indicated by the channel width indication information is greater than 160 MHz, which may also be referred to as an enhanced width indication subsequently, for example, an enhanced channel width indication.

It should be further understood that the channel width may be contiguous, or noncontiguous. For example, 320 MHz may be 160 MHz + 160 MHz. 240 MHz may be 80 MHz + 160 MHz or 160 MHz + 80 MHz.

It should be further understood that, with development of technologies, the capability range of the channel width that can be indicated by the channel width indication information provided in this application may alternatively be greater than 320 MHz, for example, 480 MHz, 640 MHz, 800 MHz, 960 MHz, 1120 MHz or 1280 MHz. Correspondingly, the capability range of the number of space-time streams indicated by the space-time stream number indication information in embodiments of this application is a range of a maximum value of the number of space-time streams that can be indicated by the space-time stream number indication information, but an actual number of space-time streams indicated by the space-time stream number indication information may be less than the capability range of the number of space-time streams.

For example, the actual number of space-time streams indicated by the space-time stream number indication information is any one of 1, 2, 3, 4, 5, 6, 7, 8, 9, 10, 11, 12, 13, 14, 15, or 16, and the maximum value of the number of space-time streams is 16. In this application, it is indicated that the capability range of the number of space-time streams indicated by the space-time stream number indication information is greater than 8, which may also be referred to as an enhanced space-time stream number indication subsequently, for example, an enhanced Rx NSS or Tx NSTS indication.

It should be further understood that, with development of technologies, the capability range of the space-time stream number indication information that can be indicated by the space-time stream number indication information provided in this application may alternatively be greater than 16, for example, 20, 24, 32, 48, or 64.

In an optional implementation, the space-time stream number indication information includes at least either of indication information of the number of transmitted space-time streams and indication information of the number of received space-time streams. In this way, the space-time stream number indication information may flexibly indicate the transmitter and the receiver for data transmission to use a same or different number of space-time streams for transmission.

In another optional implementation, the space-time stream number indication information indicates both the number of transmitted space-time streams and the number of received space-time streams. In this way, a minimum number of bits may be used to simultaneously indicate a same number of space-time streams used by the transmitter and the receiver for data transmission.

In another optional implementation, the number of space-time streams indicated by the space-time stream number indication information is less than or equal to the number of space-time streams of a preset channel width value. The preset channel width value is 80 MHz or 160 MHz.

The number of space-time streams corresponding to another channel width may be derived according to a preset condition. For example, a greater channel width indicates a smaller number of space-time streams. For another example, by using the following formula (1), the number of space-time streams whose channel width of the PPDU is a specific value that can be derived based on the indicated number of space-time streams:
Round down (an NSS or an NSTS in the OMI indicated by the control subfield * (a maximum value of an NSS or an NSTS supported when the channel width of the PPDU is a specific value/a maximum value of an NSS or an NSTS supported when the channel width of the PPDU is the preset channel width value)) - Formula (1)

The maximum value of the NSS or the NSTS supported when the channel width of the PPDU is a specific value, and the maximum value of the NSS or the NSTS supported when the channel width of the PPDU is the preset channel width value may be obtained in advance by using capability information.

For example, assuming the NSS or the NSTS in the OMI indicated by the control subfield is 4, when the channel width of the PPDU is 320 MHz, a maximum number of NSSs or NSTSs supported by a STA is 2; when a preset channel width value of the PPDU is 80 MHz, the maximum number of NSSs or NSTSs supported by the STA is 8. Therefore, according to the formula (1), when the channel width of the PPDU is 320 MHz, the number of space-time streams that can be actually supported by the STA = round down (4 * (2/8)) = 1.

For another example, assuming the NSS or the NSTS in the OMI indicated by the control subfield is 4, when the channel width of the PPDU is 320 MHz, a maximum number of NSSs or NSTSs supported by a STA is 2; when a preset channel width value of the PPDU is 160 MHz, the maximum value of NSS or NSTS supported by the STA is 4. Therefore, it is derived according to the formula (1) that when the channel width of the PPDU is 320 MHz, the number of space-time streams that can be actually supported by the STA = round down (4 * (2/4)) = 2.

In another optional implementation, when the channel width indication information indicates different channel widths, the space-time stream number indication information indicates a same number of space-time streams. For example, when the channel width indication information indicates any one of 20 MHz, 40 MHz, 80 MHz, 160 MHz, 240 MHz, or 320 MHz, the number of space-time streams indicated by the space-time stream number indication information is always 8.

In addition, when negotiating different channel widths, the initiator and the responder may always use a same number of space-time streams. By default, the number of space-time streams may be the same as a supported maximum or minimum number of control streams that is previously reported by the responder. In this case, the space-time stream number indication information may also be omitted.

In addition, after completing negotiation of the channel width and the number of space-time streams through one OM negotiation, the initiator and the responder may omit indication information of the number of transmitted space-time streams during subsequent negotiation on a change in the channel width, and agree by default that the number of subsequent space-time streams is the same as the number of previously negotiated space-time streams.

The foregoing descriptions are applicable to embodiments of this application. To avoid repetition, descriptions are properly omitted below.

With reference to the network system shown in FIG. 1 and the schematic diagram of the structure of the communications apparatus that acts as the initiator or the responder provided in FIG. 2, the following describes, by using more specific embodiments, the technical solution of the OM negotiation provided in this application.

In the following embodiment, for example, the AP in FIG. 1 is used as the initiator for OM negotiation and the STA 1 is used as the responder for the OM negotiation. Other cases are similar and are not listed one by one herein.

### Embodiment 1

Embodiment 1 describes a technical solution of the enhanced OM negotiation in which an OMI sent by the AP to the STA 1 is jointly indicated by using two or more control subfields when the AP performs OM negotiation with the STA 1.

As the initiator for the OM negotiation, the AP transmits the OMI to the STA 1 by using the transceiver (205 shown in FIG. 2) of the AP. The OMI is carried in control information corresponding to the control subfield.

As the responder for the OM negotiation, the STA 1 receives the OMI from the AP by using the transceiver (also 205 shown in FIG. 2) of the STA 1.

As shown in FIG. 7, in Embodiment 1, the control subfield that carries the OMI includes a first control subfield and a second control subfield. The first control subfield is an OMI basic indication subfield, in other words, the first control subfield is a control subfield indicating OMI in the 802.11ax standard. The second control subfield is an OMI extension indication subfield, in other words, the second control subfield is a control subfield that is different from the control subfield indicating OMI in the 802. 11ax standard. The first control subfield and the second control subfield jointly indicate an enhanced OMI. It should be understood that, in comparison with a range that can be indicated by the OMI in the 802. 11ax standard, the enhanced OMI can indicate a channel width in a greater range and more space-time streams.

Control information corresponding to the first control subfield and the second control subfield separately includes at least either of the channel width indication information (channel width) and the space-time stream number indication information (for example, Rx NSS/the Tx NSTS).

In an implementation, a value of a control identifier (control ID) corresponding to the first control subfield is 1 (represented as 0001 in binary, and shown as control ID = 0001 in the figure), and is used as an OM indication in the 802.11ax standard. As shown in FIG. 6 and FIG. 7, in the control information corresponding to the first control subfield whose control ID is 0001, the number of bits of first channel width indication information that indicates a channel width is 2, the number of bits of first space-time stream number indication information that indicates the number of space-time streams is 3. For example, the number of bits of Rx NSS is 3, and the number of bits of Tx NSTS is 3.

In a possible implementation, a value of a control identifier corresponding to the second control subfield is any one of 7 to 15.

It should be noted that, as shown in Table 2, 7 to 15 are applicable to a control identifier of reserved control subfields in the 802.11ax standard. In this embodiment of this application, control subfields corresponding to one or two of the control identifiers is used as extended control subfields, and jointly indicate the enhanced OM with the first control subfield whose control identifier is 1.

The second control subfield herein may be one control subfield, or may be increased to two or more control subfields as required.

In another implementation, a value of a control identifier corresponding to the second control subfield is 1, in other words, is the same as that of the control identifier corresponding to the first control subfield. In this case, for the initiator and the responder, when the control identifier of the first control subfield is 1, a control subfield that follows the first control subfield and whose control identifier is 1 is jointly parsed with the first control subfield by default, to obtain the enhanced OM. Alternatively, the initiator and the responder consecutively receive two control subfields whose control identifiers are 1 by default, and the two control subfields need to be jointly parsed to obtain the enhanced OM.

In yet another implementation, the value of the control identifier corresponding to the first control subfield is 15, and the value of the control identifier corresponding to the second control subfield is 1, or any one of 7 to 15. In this case, the first control subfield whose control identifier is 15 is also similar to a control subfield whose control identifier is 1 in the 802.11ax standard in terms of function for the OM negotiation. For the initiator and the responder, when the control identifier of the first control subfield is 15, a control subfield that follows the first control subfield is jointly parsed with the first control subfield by default, to obtain the enhanced OM.

In FIG. 7, for example, the second control subfield is one control subfield. The number of bits of second channel width indication information that is in control information corresponding to the second control subfield and that indicates a channel width is 1. For example, channel width MSB is 1 bit in FIG. 7. In this way, the first channel width indication information and the second channel width indication information are 3 bits in total, and may jointly indicate an enhanced channel width range of 20 MHz to 320 MHz.

Specifically, as shown in Table 3:

**Table 3 Enhanced channel width indication**

| Channel width indication information in a first control subfield (Channel Width) | Channel width indication information in a second control subfield (Channel Width MSB) | Definition (supported channel width) |
|---|---|---|
| 00 | 0 | 20 MHz |
| 01 | 0 | 40 MHz |
| 10 | 0 | 80 MHz |
| 11 | 0 | 160 MHz or 80 + 80 MHz (noncontiguous 160 MHz, and whether 160 MHz or 80 + 80 MHz is used is specifically predefined by another management frame) |
| 00 | 1 | 240 MHz or 160 + 80 MHz |
| 01 | 1 | 320 MHz or 160 + 160 MHz |
| 10 | 1 | Reserved |
| 11 | 1 | Reserved |

Table 3 is described by using an example in which a bit of the second channel width indication information is a most significant bit (Most Significant Bit, MSB) in 3 bits formed by 2 bits of the first channel width indication information and 1 bit of the second channel width indication information. Similarly, a bit of the second channel width indication information is a least significant bit (Least Significant Bit, LSB) in 3 bits formed by 2 bits of the first channel width indication information and 1 bit of the second channel width indication information. Specifically, as shown in Table 4:

**Table 4 Enhanced channel width indication**

| Channel width indication information in a second control subfield (Channel Width LSB) | Channel width indication information in a first control subfield (Channel Width) | Definition (supported channel width) |
|---|---|---|
| 0 | 00 | 20 MHz |
| 0 | 01 | 40 MHz |
| 0 | 10 | 80 MHz |
| 0 | 11 | 160 MHz or 80 + 80 MHz (noncontiguous 160 MHz, and whether 160 MHz or 80 + 80 MHz is used is specifically predefined by another management frame) |
| 1 | 00 | 240 MHz or 160 + 80 MHz |
| 1 | 01 | 320 MHz or 160 + 160 MHz |
| 1 | 10 | Reserved |
| 1 | 11 | Reserved |

Table 3 and Table 4 are merely examples. In a specific implementation, there are other combinations of correspondences between the channel width and eight values defined by 3 bits formed by 2 bits of the first channel width indication information and 1 bit of the second channel width indication information. Details are not described herein.

It should be understood that, with development of technologies, the channel width range jointly indicated by the first channel width indication information and the second channel width indication information may be greater, for example, 20 MHz to 640 MHz, or even 20 MHz to 1280 MHz. The number of bits of the second channel width indication information may remain 1, or increase to 2, 3, or the like accordingly. Alternatively, the second channel width indication information remaining 1 bit, the first channel width indication information and the second channel width indication information indicates some greater channel widths, for example, 16 channel widths from 20 MHz to 640 MHz.

In this way, after the STA 1 serving as the responder receives the first control subfield and the second control subfield by using the transceiver 205 of the STA 1, the processor 201 of the STA 1 may jointly parse the first channel width indication information and the second channel width indication information in the first control subfield and the second control subfield, to obtain the channel width indicated by the AP to the STA 1.

For the space-time stream number indication information, the number of bits of first space-time stream number indication information that is in the control information corresponding to the first control subfield and that indicates the number of space-time streams is 3. The number of bits of second space-time stream number indication information that is in control information corresponding to the second control subfield and that indicates the number of space-time streams is 1. A total number of bits of the first space-time stream number indication information and the second space-time stream number indication information is 4, and a range of the number of space-time streams jointly indicated is 1 to 16.

Specifically, as shown in Table 5:

**Table 5 Enhanced Tx NSTS or enhanced Rx NSS indication**

| Number of space-time streams in the first control subfield (Tx NSTS/Rx NSS) | Number of space-time streams in the second control subfield (Tx NSTS/Rx NSS MSB) | Definition (supported Tx NSTS or Rx NSS) |
|---|---|---|
| 000 | 0 | 1 |
| 001 | 0 | 2 |
| 010 | 0 | 3 |
| 011 | 0 | 4 |
| 100 | 0 | 5 |
| 101 | 0 | 6 |
| 110 | 0 | 7 |
| 111 | 0 | 8 |
| 000 | 1 | 9 |
| 001 | 1 | 10 |
| 010 | 1 | 11 |
| 011 | 1 | 12 |
| 100 | 1 | 13 |
| 101 | 1 | 14 |
| 110 | 1 | 15 |
| 111 | 1 | 16 |

Table 5 is described by using an example in which 1 bit of the second space-time stream number indication information is a most significant bit in 3 bits formed by 2 bits of the first space-time stream number indication information and 1 bit of the second space-time stream number indication information. Similarly, the bit of the second channel width indication information is a least significant bit (LSB) in 3 bits formed by 2 bits of the first channel width indication information and 1 bit of the second channel width indication information. Specifically, as shown in Table 6:

**Table 6 Enhanced Tx NSTS or enhanced Rx NSS indication**

| Number of space-time streams in the second control subfield (Tx NSTS/Rx NSS MSB) | Number of space-time streams in the first control subfield (Tx NSTS/Rx NSS) | Definition (supported Tx NSTS or Rx NSS) |
|---|---|---|
| 0 | 000 | 1 |
| 0 | 001 | 2 |
| 0 | 010 | 3 |
| 0 | 011 | 4 |
| 0 | 100 | 5 |
| 0 | 101 | 6 |
| 0 | 110 | 7 |
| 0 | 111 | 8 |
| 1 | 000 | 9 |
| 1 | 001 | 10 |
| 1 | 010 | 11 |
| 1 | 011 | 12 |
| 1 | 100 | 13 |
| 1 | 101 | 14 |
| 1 | 110 | 15 |
| 1 | 111 | 16 |

Table 5 and Table 6 are merely examples. In a specific implementation, there are other combinations of correspondences between the channel width and 16 values defined by 4 bits formed by 3 bits of the first space-time stream number indication information and 1 bit of the second space-time stream number indication information. Details are not described herein.

It should be understood that, with development of technologies, the range of the number of space-time streams jointly indicated by the first space-time stream number indication information and the second space-time stream number indication information may be greater, for example, 1 to 32, or even 1 to 64. The number of bits of the second space-time stream number indication information may remain 1, or increase to 2, 3, or the like accordingly. Alternatively, the second space-time stream number indication information remaining 1 bit, the second space-time stream number indication information may indicate 1 to 32 or 1 to 64, for example, 16 values from 1 to 32.

In a possible implementation, the number of space-time streams jointly indicated by the first space-time stream number indication information and the second space-time stream number indication information is less than or equal to the number of space-time streams of a preset channel width value.

The preset channel width value is 80 MHz or 160 MHz.

A method for deriving the number of space-time streams corresponding to another channel width and beneficial effects thereof have been described in detail in the foregoing general description before Embodiment 1. Details are not described herein again.

In still another possible implementation, when the first channel width indication information and the second channel width indication information jointly indicate different channel widths, the first space-time stream number indication information and the second space-time stream number indication information jointly indicate a same number of space-time streams.

In other words, the first control subfield and the second control subfield may be used to indicate different channel widths and a same number of space-time streams. Beneficial effects of indicating the same number of space-time streams have been described in detail in the foregoing general description before Embodiment 1. Details are not described herein again.

In addition, in another implementation, the number of space-time streams jointly indicated by the first space-time stream number indication information and the second space-time stream number indication information may be the number of received space-time streams, or the number of transmitted space-time streams. In other words, the number of received space-time streams and the number of transmitted space-time streams may be combined into one piece of indication information. For example, the Rx NSS and the Tx NSTS shown in FIG. 6 may be combined into one piece of indication information, and occupy 3 bits in total. The Rx NSS MSB and the Tx NSTS MSB shown in FIG. 7 may be combined into one piece of indication information, and occupy 1 bit in total. This can save indication overheads.

In another implementation, the first space-time stream number indication information still separately indicates the number of received space-time streams and the number of transmitted space-time streams. For example, the Rx NSS and the Tx NSTS shown in FIG. 6 each occupy 3 bits. The second space-time stream number indication information indicates both the number of received space-time streams and the number of transmitted space-time streams. For example, the Rx NSS MSB and the Tx NSTS MSB shown in FIG. 7 may be combined into one piece of indication information, and occupy 1 bit in total. The 1 bit of the second space-time stream number indication information is separately combined with two 3 bits of the first space-time stream number indication information to jointly indicate the number of space-time streams. This also saves the indication overheads to some extent.

In conclusion, in the OM negotiation technology implemented by the initiator AP and the responder STA 1 in a Wi-Fi network system provided in Embodiment 1, based on the OMI basic indication subfield, the other control subfield is used as the OMI extension indication subfield. In this case, maximum compatibility with the 802.11ax standard is achieved, and OM negotiation on a greater channel width or more space-time streams is implemented at low overheads.

If none of OMs of channel width, Tx NSTS, and Rx NSS claimed by the transmitter for communications exceeds a maximum value supported by the 802.11ax standard, the transmitter does not need to send the second control subfield (the OMI extension indication subfield), but only sends the first control subfield (that is, an OMI basic indication subfield corresponding to control ID = 0001 in the 802.11ax standard).

If the receiver for communications finds only the first control subfield (the OMI basic indication subfield) in the A-control subfield, the receiver obtains, from the OM control subfield, an OM indicated by the initiator for the OM negotiation. If the receiver finds both the OMI basic indication subfield and the OMI extension indication subfield, the receiver jointly reads an enhanced OM indicated by the OMI initiator.

The foregoing Embodiment 1 describes how to implement enhanced OM negotiation by using the two control fields. The OM negotiation technology in this embodiment of this application may also be implemented by using one control subfield, which is described separately in a plurality of embodiments below.

### Embodiment 2

Embodiment 2 describes a technical solution of the enhanced OM negotiation in which an OMI sent by the AP to the STA 1 is indicated by using one control subfield when the AP performs OM negotiation with the STA 1.

In Embodiment 2, the control subfield is referred to as a third control subfield. Correspondingly, the OMI is carried in control information corresponding to the third control subfield. The control information includes at least either of third channel width indication information and third space-time stream number indication information.

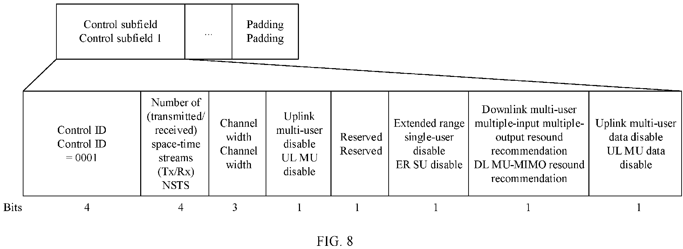

In an implementation, as shown in FIG. 8, the third channel width indication information (channel width) in control information corresponding to the third control subfield is 3 bits, and indicates a channel width range from 20 MHz to 320 MHz. The third space-time stream number indication information (indicating both Rx NSS and Tx NSTS) is 4 bits, and indicates that a range of the number of transmitted space-time streams and the number of received space-time streams is 1 to 16. FIG. 8 is described by using an example in which a value of a control identifier of the third control subfield is 1. Certainly, a control subfield corresponding to a value of a control identifier may be further redefined to indicate the enhanced OM.

In an embodiment shown in FIG. 8, the Rx NSS and the Tx NSTS are indicated by using one piece of third space-time stream number indication information. This saves 2 * 3 - 4 = 2 bits compared with the 802.11ax standard in which the Rx NSS and the Tx NSTS are separately indicated by using 3 bits. However, compared with 2-bit channel width in the 802.11ax standard, there is only 1 bit more in the 3 bit third channel width indication information (channel width). Therefore, in general, compared with the 802.11ax standard, the enhanced OM negotiation is implemented without increasing the number of bits in the third control subfield.

A sequence of control sub-information in the control information corresponding to the control subfield shown in FIG. 8 is merely an example. There may be another variation, the number of bits of another control sub-information may also be adaptively changed. Compared with the 802.11ax standard, a sequence of uplink multi-user disable (UL MU disable) of the control subfield shown in FIG. 8 is changed. Certainly, in another implementation, the sequence may be the same as that of the control subfield in the 802. 11ax standard.

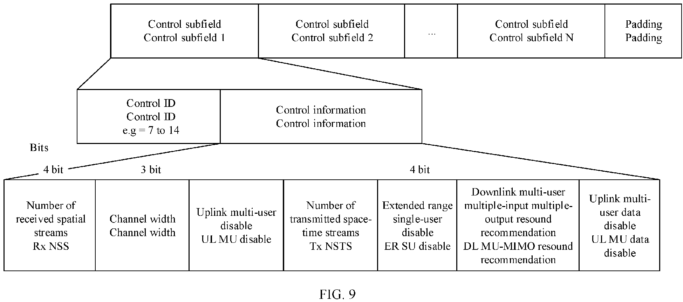

In an implementation, as shown in FIG. 9, the third channel width indication information (channel width) in control information corresponding to the third control subfield (control subfield 1 in FIG. 9) is 3 bits, and indicates a channel width range from 20 MHz to 320 MHz. The third space-time stream number indication information (the Rx NSS or the Tx NSTS) is 4 bits, and indicates that a range of the number of space-time streams is 1 to 16. FIG. 9 is described by using an example in which a value of a control identifier of the third control subfield is 7 to 14. For example, a control subfield whose control identifier is 8 is used to indicate the enhanced OM.

In this implementation, channel width in control information corresponding to any control subfield corresponding to control ID = 7 to 14 is set to 3 bits in the 802.11ax standard, so that an indication of a greater width range can be supported. In addition, the Rx NSS or the Tx NSTS that occupies 3 bits in the 802.11ax standard are set to 4 bits, so that an indication of a greater range of the number of space-time streams can be supported.

For an initiator and a responder that support the 802. 11ax, control information corresponding to a control subfield corresponding to control ID = 1 is parsed, to obtain at least either of the channel width and the Rx NSS or the Tx NSTS. For an initiator and a responder that support a standard after the 802. 11ax standard, control information corresponding to a control subfield corresponding to control ID = 8 is parsed, to obtain at least either of the channel width and the Rx NSS or the Tx NSTS.

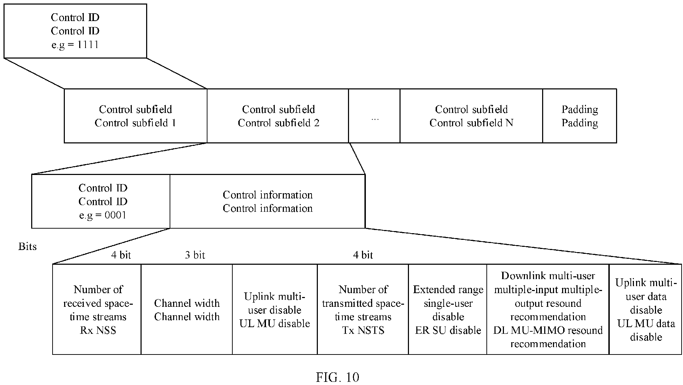

In still another implementation, as shown in FIG. 10, the third control subfield is one control subfield located after a control subfield whose identifier value is 15. The control subfield herein (a control subfield 1 shown in FIG. 10) includes only a control ID, for example, a control ID=1111, has a function of extension, and does not include corresponding control information (control information). Therefore, a subsequent control ID may be any value, in other words, the value of the identifier of the third control subfield is any one of 0 to 15.

For example, a control ID of the third control subfield may be the same as a control subfield that is defined in the 802.11ax standard and that is used for OM negotiation, in other words, control ID = 0001. Control information corresponding to the third control subfield carries an enhanced OM, where the number of bits of the Rx NSS, the channel width, and the Tx NSTS are at least 4, 3, and 4 respectively. A control subfield with another function is similar for alignment between the 802. 11ax standard and a subsequent standard.

It should be understood that, the third channel width indication information may indicate a greater channel width range, for example, indicate 480 MHz, 640 MHz, 800 MHz, 960 MHz, 1120 MHz. The third space-time stream number indication information may indicate a greater range of the number of space-time streams, for example, 1 to 32, or 1 to 64. Specifically, the number of space-time streams is 20, 24, 32, 48, 64, or the like.

Optionally, the number of space-time streams indicated by the third space-time stream number indication information is less than or equal to the number of space-time streams of a preset channel width value. The preset channel width value is 80 MHz or 160 MHz.

A method for deriving the number of space-time streams corresponding to another channel width and beneficial effects thereof have been described in detail in the foregoing general description before Embodiment 1. Details are not described herein again.

Optionally, when the third channel width indication information indicates different channel widths, the third space-time stream number indication information indicate a same number of space-time streams.

In other words, the third control subfield may be used to indicate different channel widths and a same number of space-time streams. Beneficial effects of indicating the same number of space-time streams have been described in detail in the foregoing general description before Embodiment 1. Details are not described herein again.

In addition, in another implementation, the number of space-time streams indicated by the third space-time stream number indication information may be the number of received space-time streams, or the number of transmitted space-time streams. In other words, the number of received space-time streams and the number of transmitted space-time streams may be combined into one piece of indication information. For example, the Rx NSS and the Tx NSTS shown in FIG. 9 or FIG. 10 may be combined into one piece of indication information, and occupy 4 bits in total. This can save indication overheads.

In Embodiment 2 of this application, in the 802.11ax standard, the control subfield whose identifier value is 15 is used as an identifier point indicating the enhanced OMI. In this case, the responder for the OM negotiation may use the identifier point as an identifier, and identify a control subfield following the control subfield whose identifier value is 15 as an enhanced OM control subfield. This can support negotiation on a greater channel width and a greater number of space-time streams. In addition, Embodiment 2 may be highly compatible with the 802.11ax standard. For an initiator and a responder that support or do not support the 802.11ax standard, a control subfield corresponding to control ID = 0001 may be parsed, to obtain OM information.

### Embodiment 3

Embodiment 3 still describes a technical solution of the enhanced OM negotiation in which an OMI sent by the AP to the STA 1 is indicated by using one control subfield when the AP performs OM negotiation with the STA 1.

In Embodiment 3, the control subfield is still referred to as a third control subfield. Correspondingly, the OMI is carried in control information corresponding to the third control subfield. The control information includes at least either of third channel width indication information and third space-time stream number indication information.

In an implementation, the third channel width indication information in the control information corresponding to the third control subfield is 3 bits.

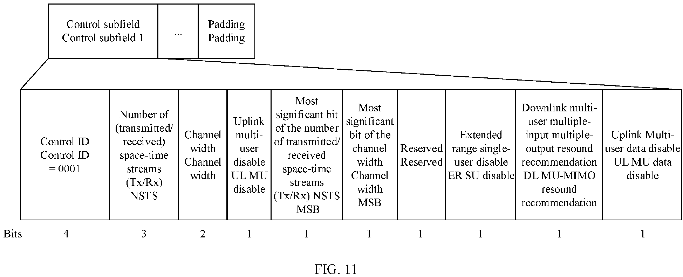

Different from Embodiment 2, in the control information corresponding to the third control subfield, the third channel width indication information includes first channel width indication sub-information and second channel width indication sub-information. The first channel width indication sub-information (the channel width as shown in FIG. 11) is 2 bits. The second channel width indication sub-information (the channel width MSB as shown in FIG. 11) is 1 bit. The first channel width indication sub-information and the second channel width indication sub-information jointly indicate a channel width.

FIG. 11 is described by using an example in which 1 bit of the second channel width indication sub-information is used as an MSB in 3 bits of the third channel width indication information formed by 2 bits of the first channel width indication sub-information and 1 bit of the second channel width indication sub-information. In another implementation, 1 bit of the second channel width indication sub-information may also be used as an LSB in 3 bits of the third channel width indication information formed by 2 bits of the first channel width indication sub-information and 1 bit of the second channel width indication sub-information.

In this case, the responder jointly parses first channel width indication sub-information and second channel width indication sub-information, to obtain an indicated channel width.

Different from Embodiment 2, the third space-time stream number indication information includes first space-time stream number indication sub-information and second space-time stream number indication sub-information. The first space-time stream number indication sub-information (the Tx NSTS or the Rx NSTS as shown in FIG. 11) is 3 bits. The second space-time stream number indication sub-information (the Tx NSTS MSB and the Rx NSTS MSB as shown in FIG. 11) is 1 bit. The first space-time stream number indication sub-information and the second space-time stream number indication sub-information jointly indicate the number of space-time streams.

FIG. 11 is described by using an example in which 1 bit of the second space-time stream number indication sub-information is used as an MSB in 4 bits of the third space-time stream number indication information formed by 3 bits of the first space-time stream number indication sub-information and 1 bit of the second space-time stream number indication sub-information. In another implementation, 1 bit of the second space-time stream number indication sub-information may alternatively be used as an LSB in 4 bits of the third space-time stream number indication information formed by 3 bits of the first space-time stream number indication sub-information and 1 bit of the second space-time stream number indication sub-information.

In this case, the responder jointly parses the first space-time stream number indication sub-information and the second space-time stream number indication sub-information, to obtain an indicated number of space-time streams. In a possible implementation, an identifier value corresponding to the third control subfield is any one of 0 to 15. For example, the identifier value corresponding to the third control subfield is 1.

Optionally, the third control subfield may be one control subfield located after a control subfield whose identifier value is 15.

Optionally, the number of space-time streams jointly indicated by the first space-time stream number indication sub-information and the second space-time stream number indication sub-information is less than or equal to the number of space-time streams of a preset channel width value. The preset channel width value is 80 MHz or 160 MHz.

A method for deriving the number of space-time streams corresponding to another channel width and beneficial effects thereof have been described in detail in the foregoing general description before Embodiment 1. Details are not described herein again.

Optionally, when the first channel width indication information and the second channel width indication information jointly indicate different channel widths, the first space-time stream number indication information and the second space-time stream number indication information jointly indicate a same number of space-time streams.

In other words, the third control subfield may be used to indicate different channel widths and a same number of space-time streams. Beneficial effects of indicating the same number of space-time streams have been described in detail in the foregoing general description before Embodiment 1. Details are not described herein again.

In Embodiment 3 of this application, the channel width indication information or the space-time stream number indication information in the control subfield in the 802.11ax standard is carried in two indication subfields. This can implement the enhanced OM negotiation while ensuring maximum compatibility with the 802.11ax standard.

### Embodiment 4

Embodiment 4 still describes a technical solution of the enhanced OM negotiation in which an OMI sent by the AP to the STA 1 is indicated by using one control subfield when the AP performs OM negotiation with the STA 1.

In Embodiment 4, the control subfield is referred to as a fourth control subfield. Correspondingly, the OMI is carried in control information corresponding to the fourth control subfield. The control information includes at least either of fourth channel width indication information and fourth space-time stream number indication information. Optionally, the fourth channel width indication information is 2 bits, and indicates a channel width range from 20 MHz to 320 MHz.

Specifically, as shown in Table 7:

**Table 7 Redefined enhanced channel width indication - manner 1**

| Channel width in an OMI control subfield | Definition in a case in which both the transmitter and the receiver support the 11be standard | Definition in a case in which at least either of the transmitter and the receiver does not support the 11be standard |
|---|---|---|
| 00 | 20 MHz | 20 MHz |
| 01 | 80 MHz | 40 MHz |
| 10 | 160 MHz or 80 + 80 MHz | 80 MHz |
| 11 | 320 MHz or 160 + 160 MHz | 160 MHz or 80 + 80 MHz |

Both the initiator and the responder support a standard after the 802.11ax, and a channel width range indicated by the fourth channel width indication information in the fourth control subfield (the OMI control subfield) is 20 MHz to 320 MHz.

Alternatively, either of the initiator and the responder does not support a standard after the 802.11ax, and a channel width range indicated by the fourth channel width indication information is 20 MHz to 160 MHz.

For example, the fourth channel width indication information is indicated to be 2 bits, and a value of the 2 bits is 11. In one case, both the initiator and the responder support a standard after the 802.11ax, for example, the 802.11be standard. Then 11 means that a channel width negotiated by the initiator and the responder is 320 MHz or 160 + 160 MHz. In another case, either of the initiator and the responder does not support a standard after the 802.11ax. For example, the responder does not support the 802.11be standard. Then 11 means that a channel width negotiated by the initiator and the responder is 160 MHz or 80 + 80 MHz.

In another possible implementation, the fourth channel width indication information indicates any one of the following four types:
a channel width of 20 MHz, a channel width of 40 MHz, a channel width of 80 MHz, and all supported within a capability range.

Specifically, as shown in Table 8:

**Table 8 Redefined enhanced channel width indication - manner 2**

| Channel width in an OMI control subfield | Definition in a case in which both the transmitter and the receiver support the 11be standard | Definition in a case in which at least either of the transmitter and the receiver does not support the 11be standard |
|---|---|---|
| 00 | 20 MHz | 20 MHz |
| 01 | 40 MHz | 40 MHz |
| 10 | 80 MHz | 80 MHz |
| 11 | All supported within a capability range | 160 MHz or 80 + 80 MHz |

As shown in FIG. 8, the fourth channel width indication information is 2 bits, and a value of the 2 bits is 11. In one case, both the initiator and the responder support a standard after the 802.11ax, for example, the 802.11be standard. Then 11 means that a channel width negotiated by the initiator and the responder is all supported within a capability range. In another case, either of the initiator and the responder does not support a standard after the 802.11ax. For example, the responder does not support the 802.11be standard. Then 11 means that a channel width negotiated by the initiator and the responder is 160 MHz or 80 + 80 MHz.

It should be noted that Table 7 and Table 8 are merely examples. A channel width indicated by the 2-bit fourth channel width indication information may also be another value, for example, 240 MHz, 160 + 80 MHz, or 80 + 160 MHz. However, the following condition should be satisfied: Both the initiator and the responder support a standard after the 802.11ax, then the 2-bit indicates any four values from 20 MHz to 320 MHz; or either of the initiator and the responder does not support a standard after the 802.11ax, then the 2-bit indicates any four values from 20 MHz to 160 MHz.

It should be understood that, the fourth channel width indication information may indicate a greater channel width range, for example, indicate 640 MHz.

Similarly, in the control information corresponding to the fourth control subfield, the fourth space-time stream number indication information is 3 bits, and indicates that a range of the number of space-time streams is 1 to 16. In an implementation, both the initiator and the responder support a standard after the 802.11ax, and the number of space-time streams indicated by the fourth space-time stream number indication information is any value from 1 to 16. Optionally, the fourth space-time stream number indication information indicates any eight values from 1 to 16. Alternatively, either of the initiator and the responder does not support a standard after the 802.11ax, and the number of space-time streams indicated by the fourth space-time stream number indication information is any value from 1 to 8.

Specifically, as shown in Table 9:

**Table 9 Redefined enhanced Tx NSTS indication or enhanced Rx NSS indication - manner 1**

| Tx NSTS/Rx NSS in the OM control subfield | Definition in a case in which both the transmitter and the receiver support the 11be standard (supported Tx NSTS or Rx NSS) | Definition in a case in which at least either of the transmitter and the receiver does not support the 11be standard (supported Tx NSTS or Rx NSS) |
|---|---|---|
| 000 | 1 | 1 |
| 001 | 2 | 2 |
| 010 | 4 | 3 |
| 011 | 6 | 4 |
| 100 | 8 | 5 |
| 101 | 10 | 6 |
| 110 | 12 | 7 |
| 111 | 16 | 8 |

To put it simply, in the OMI control subfield, if the number of bits used to indicate Tx NSTS/Rx NSS remains unchanged at 3 bits, a mode supported by 11ax (for example, modes 3, 5, or 7 of Tx NSTS/Rx NSS) is replaced with a new mode that needs to be supported (modes 10, 12, or 16 of Tx NSTS/Rx NSS in Table 9). A specific definition column to be used is determined by the receiver (the responder for the OM negotiation) of the OM control subfield based on whether the receiver supports the 802. 11be standard (or a subsequent standard).

In another implementation, a greater channel width or a greater number of space-time streams is not distinguished. Therefore, a preset value is used to represent that all OMs are supported within a capability range. Specifically, as shown in Table 10:

**Table 10 Redefined enhanced Tx NSTS indication or enhanced Rx NSS indication - manner 2**

| Tx NSTS/Rx NSS in the OM control subfield | Definition in a case in which both the transmitter and the receiver support the 11be standard (supported Tx NSTS or Rx NSS) | Definition in a case in which at least either of the transmitter and the receiver does not support the 11be standard (supported Tx NSTS or Rx NSS) |
|---|---|---|
| 000 | 1 | 1 |
| 001 | 2 | 2 |
| 010 | 3 | 3 |
| 011 | 4 | 4 |
| 100 | 5 | 5 |
| 101 | 6 | 6 |
| 110 | 7 | 7 |
| 111 | All supported within a capability range | 8 |

In the examples shown in Table 9 and Table 10, if the receiver (the responder for the OM negotiation) of the OM control subfield does not support the 802.11be standard, the receiver needs to send corresponding information based on original definition of the OM subfield defined in the 11ax, instead of new definition.

Similarly, one STA that supports only the 11ax standard does not know how to interpret based on the new definition, and always interprets based on the definition in the 11ax.

For example, if the responder for the OM negotiation is a STA that supports only the 802. 11ax standard, the responder does not know whether the responder supports the 11be, and does not determine whether the initiator for the OM negotiation supports the 11be. The STA parses the OMI only in a manner specified in the 802.11 ax standard. In this case, if the initiator for the OM negotiation supports only a standard after the 802. 11ax standard, for example, the 802. 11be standard, the initiator cannot send the enhanced OM indication information provided in this application to the STA.

If the responder for the OM negotiation is a STA that supports a standard after the 802.11ax standard, for example, the responder knows that the responder is a STA that supports the 802.11be, when receiving the OMI, the responder needs to determine whether the initiator supports a standard after the 802.11ax standard (the responder learns, through a transmitter address, of a standard type supported by the initiator) to acknowledge by default, that the initiator definitely supports the standard after the 802.11ax standard. In this case, the OMI sent by the initiator is an enhanced OMI.

It should be understood that, the fourth space-time stream number indication information may indicate a greater range of the number of space-time streams, for example, 1 to 32, or 1 to 64. When the existing number of bits remains unchanged, 3 bits may be used to indicate any eight values from 1 to 32, or any eight values from 1 to 64, or seven values thereof plus "all supported within a capability range".

In an implementation, the number of space-time streams indicated by the fourth space-time stream number indication information is less than or equal to the number of space-time streams of a preset channel width value. The preset channel width value is 80 MHz or 160 MHz.

In an implementation, when the fourth channel width indication information indicates different channel widths, the fourth space-time stream number indication information indicate a same number of space-time streams.

In this embodiment of this application, without increasing the number of bits of an existing control subfield, based on whether a standard after the 802.11ax is supported, same OMI information may be parsed into different definition. Therefore, the enhanced OM negotiation is implemented while ensuring the maximum compatibility with the 802.11ax standard at minimum overheads.

Without loss of generality, a sequence of control sub-information in the control information corresponding to a control subfield in any one embodiment from Embodiment 1 to Embodiment 4 is merely an example. There may be another variation, the number of bits of another control sub-information may also be adaptively changed. This is not limited in this embodiment of this application.

In the foregoing Embodiment 1 to Embodiment 4 provided in this application, the enhanced OM negotiation method provided in embodiments of this application is described with the AP serving as the initiator for the OM negotiation and the STA 1 serving as the responder for the OM negotiation.

The STA serves as the initiator for the OM negotiation, and the AP serves as the responder for the OM negotiation. OM negotiation between APs or STAs is similar. Details are not described herein.

To implement the technical solution of the enhanced OM negotiation provided in embodiments of this application, the access point and the station may include a hardware structure and a software module, and implement the functions in a form of the hardware structure, the software module, or a combination of the hardware structure and the software module. A function in the foregoing functions may be implemented in a form of the hardware structure, the software module, or the combination of the hardware structure and the software module.

A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of an entire system. A person skilled in the art may use various methods to implement the described functions for each particular application, but it should not be considered that the implementation goes beyond the scope of embodiments of this application.

This application further provides a computer-readable storage medium. The computer-readable storage medium stores a computer program, and when the computer-readable storage medium is executed by a computer, a function of any one of the foregoing method embodiments is implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded or executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state disk (solid state disk, SSD)), or the like.

## Claims

1. A negotiation method for an enhanced operating mode, applied to an initiator (AP) for operating mode negotiation and comprising:
sending, by an initiator (AP), an operating mode indication OMI to a responder (STA),
wherein the OMI comprises a channel width indication information and a space-time stream number indication information, wherein a capability range of a channel width indicated by the channel width indication information is greater than 160 MHz, and a capability range of the number of space-time streams indicated by the space-time stream number indication information is greater than 8,
wherein the OMI is carried in control information corresponding to a control subfield, and the control information comprises at least either of the channel width indication information and the space-time stream number indication information, wherein the control subfield comprises a first control subfield and a second control subfield, and the first control subfield is an OMI basic indication subfield, and the second control subfield is an OMI extension indication subfield; and the first control subfield and the second control subfield jointly indicate an enhanced OMI; and
performing, by the initiator (AP), transmission with the responder (STA).

2. The method according to claim 1, wherein the number of bits of first channel width indication information that is in control information corresponding to the first control subfield and that indicates a channel width is 2, the number of bits of second channel width indication information that is in control information corresponding to the second control subfield and that indicates a channel width is 1, and a channel width range jointly indicated by the first channel width indication information and the second channel width indication information is 20 MHz to 320 MHz.

3. The method according to claim 1 or 2, wherein the number of bits of first space-time stream number indication information that is in the control information corresponding to the first control subfield and that indicates the number of space-time streams is 3, the number of bits of second space-time stream number indication information that is in the control information corresponding to the second control subfield and that indicates the number of space-time streams is 1, and a range of the number of space-time streams jointly indicated by the first space-time stream number indication information and the second space-time stream number indication information is 1 to 16.

4. The method according to claim 3, wherein the number of space-time streams jointly indicated by the first space-time stream number indication information and the second space-time stream number indication information is less than or equal to the number of space-time streams of a preset channel width value.

5. The method according to claim 1 , wherein the OMI is carried in control information corresponding to a third control subfield, and the control information comprises at least either of third channel width indication information and third space-time stream number indication information, wherein the third channel width indication information is 3 bits, and indicates a channel width range from 20 MHz to 320 MHz; and the third space-time stream number indication information is 4 bits, and indicates that a range of the number of space-time streams is 1 to 16.

6. A negotiation method for an operating mode, applied to a responder (STA) for operating mode negotiation and comprising:
receiving an operating mode indication OMI from an initiator (AP),
wherein the OMI comprises a channel width indication information and a space-time stream number indication information, wherein a capability range of a channel width indicated by the channel width indication information is greater than 160 MHz, and a capability range of the number of space-time streams indicated by the space-time stream number indication information is greater than 8,
wherein the OMI is carried in control information corresponding to a control subfield, and the control information comprises at least either of the channel width indication information and the space-time stream number indication information, wherein the control subfield comprises a first control subfield and a second control subfield, and the first control subfield is an OMI basic indication subfield, and the second control subfield is an OMI extension indication subfield; and the first control subfield and the second control subfield jointly indicate an enhanced OMI; and
performing transmission with the initiator (AP) based on the OMI.

7. The method according to claim 6, wherein the responder (STA) jointly parses first channel width indication information in the first control subfield and second channel width indication information in the second control subfield, to obtain an indicated channel width.

8. The method according to claim 6, wherein the responder (STA) jointly parses first space-time stream number indication information in the first control subfield and second space-time stream number indication information in the second control subfield, to obtain an indicated number of space-time streams.

9. The method according to any one of claims 6 to 8, wherein the control subfield is a third control subfield, comprising first channel width indication sub-information and second channel width indication sub-information, and the responder (STA) jointly parses the first channel width indication sub-information and the second channel width indication sub-information, to obtain an indicated channel width.

10. A communication apparatus, configured to perform the method of any one of claims 1 to 5, or any one of claims 6 to 9.

11. A computer-readable storage medium, wherein the computer-readable storage medium is configured to store a computer program, and when the computer program is executed, the method according to any one of claims 1 to 5, or any one of claims 6 to 9 is implemented.

## Patentansprüche

1. Aushandlungsverfahren für einen erweiterten Betriebsmodus, das auf einen Initiator (AP) für eine Betriebsmodusaushandlung angewendet wird und umfasst:
Senden einer Betriebsmodusanzeige OMI durch einen Initiator (AP) an einen Responder (STA),
wobei die OMI eine Kanalbreitenanzeigeinformation und eine Raum-Zeit-Stromanzahlanzeigeinformation umfasst, wobei ein Leistungsfähigkeitsbereich einer Kanalbreite, die durch die Kanalbreitenanzeigeinformation angezeigt wird, größer als 160 MHz ist, und ein Leistungsfähigkeitsbereich der Anzahl von Raum-Zeit-Strömen, die durch die Raum-Zeit-Stromanzahlanzeigeinformation angezeigt wird, größer als 8 ist,
wobei die OMI in Steuerinformationen getragen wird, die einem Steuerteilfeld entsprechen, und die Steuerinformationen mindestens entweder die Kanalbreitenanzeigeinformation und die Raum-Zeit-Stromanzahlanzeigeinformation umfassen, wobei das Steuerteilfeld ein erstes Steuerteilfeld und ein zweites Steuerteilfeld umfasst und das erste Steuerteilfeld ein OMI-Basisanzeigeteilfeld ist und das zweite Steuerteilfeld ein OMI-Erweiterungsanzeigeteilfeld ist; und das erste Steuerteilfeld und das zweite Steuerteilfeld gemeinsam eine erweiterte OMI anzeigen; und
Durchführen, durch den Initiator (AP), einer Übertragung mit dem Responder (STA).

2. Verfahren nach Anspruch 1, wobei die Anzahl von Bits der ersten Kanalbreitenanzeigeinformation, die in Steuerinformationen enthalten ist, die dem ersten Steuerteilfeld entsprechen und die anzeigen, dass eine Kanalbreite 2 beträgt, die Anzahl der Bits der zweiten Kanalbreitenanzeigeinformation, die in Steuerinformationen enthalten ist, die dem zweiten Steuerteilfeld entsprechen und die anzeigen, dass eine Kanalbreite 1 beträgt, und ein Kanalbreitenbereich, der gemeinsam durch die erste Kanalbreitenanzeigeinformation und die zweite Kanalbreitenanzeigeinformation angezeigt wird, 20 MHz bis 320 MHz beträgt.

3. Verfahren nach Anspruch 1 oder 2, wobei die Anzahl der Bits der ersten Raum-Zeit-Stromanzahlanzeigeinformation, die in den Steuerinformationen enthalten ist, die dem ersten Steuerteilfeld entsprechen, und die die Anzahl der Raum-Zeit-Ströme anzeigt, 3 beträgt, die Anzahl der Bits der zweiten Raum-Zeit-Stromanzahlanzeigeinformation, die in den Steuerinformationen enthalten ist, die dem zweiten Steuerteilfeld entsprechen, und die die Anzahl der Raum-Zeit-Ströme anzeigt, 1 beträgt, und ein Bereich der Anzahl der Raum-Zeit-Ströme, die gemeinsam durch die erste Raum-Zeit-Stromanzahlanzeigeinformation und die zweite Raum-Zeit-Stromanzahlanzeigeinformation angezeigt wird, 1 bis 16 beträgt.

4. Verfahren nach Anspruch 3, wobei die Anzahl der Raum-Zeit-Ströme, die gemeinsam durch die erste Raum-Zeit-Stromanzahlanzeigeinformation und die zweite Raum-Zeit-Stromanzahlanzeigeinformation angezeigt werden, kleiner als oder gleich der Anzahl der Raum-Zeit-Ströme eines voreingestellten Kanalbreitenwerts ist.

5. Verfahren nach Anspruch 1, wobei die OMI in Steuerinformationen getragen wird, die einem dritten Steuerteilfeld entsprechen, und die Steuerinformationen mindestens entweder die dritte Kanalbreitenanzeigeinformation und die dritte Raum-Zeit-Stromanzahlanzeigeinformation umfassen, wobei die dritte Kanalbreitenanzeigeinformation 3 Bits beträgt und einen Kanalbreitenbereich von 20 MHz bis 320 MHz anzeigt; und die dritte Raum-Zeit-Stromanzahlanzeigeinformation 4 Bits beträgt und anzeigt, dass ein Bereich der Anzahl der Raum-Zeit-Ströme 1 bis 16 beträgt.

6. Aushandlungsverfahren für einen Betriebsmodus, das auf einen Responder (STA) zur Betriebsmodusaushandlung angewendet wird und umfasst:
Empfangen einer Betriebsmodusanzeige OMI von einem Initiator (AP),
wobei die OMI eine Kanalbreitenanzeigeinformation und eine Raum-Zeit-Stromanzahlanzeigeinformation umfasst, wobei ein Leistungsfähigkeitsbereich einer Kanalbreite, die durch die Kanalbreitenanzeigeinformation angezeigt wird, größer als 160 MHz ist, und ein Leistungsfähigkeitsbereich der Anzahl von Raum-Zeit-Strömen, die durch die Raum-Zeit-Stromanzahlanzeigeinformation angezeigt wird, größer als 8 ist,
wobei die OMI in Steuerinformationen getragen wird, die einem Steuerteilfeld entsprechen, und die Steuerinformationen mindestens entweder die Kanalbreitenanzeigeinformation und die Raum-Zeit-Stromanzahlanzeigeinformation umfassen, wobei das Steuerteilfeld ein erstes Steuerteilfeld und ein zweites Steuerteilfeld umfasst und das erste Steuerteilfeld ein OMI-Basisanzeigeteilfeld ist und das zweite Steuerteilfeld ein OMI-Erweiterungsanzeigeteilfeld ist; und das erste Steuerteilfeld und das zweite Steuerteilfeld gemeinsam eine erweiterte OMI anzeigen; und
Durchführen der Übertragung mit dem Initiator (AP) basierend auf der OMI.

7. Verfahren nach Anspruch 6, wobei der Responder (STA) die erste Kanalbreitenanzeigeinformation in dem ersten Steuerteilfeld und die zweite Kanalbreitenanzeigeinformation in dem zweiten Steuerteilfeld gemeinsam analysiert, um eine angezeigte Kanalbreite zu erhalten.

8. Verfahren nach Anspruch 6, wobei der Responder (STA) die erste Raum-Zeit-Stromanzahlanzeigeinformation in dem ersten Steuerteilfeld und die zweite Raum-Zeit-Stromanzahlanzeigeinformation in dem zweiten Steuerteilfeld gemeinsam analysiert, um eine angezeigte Anzahl von Raum-Zeit-Strömen zu erhalten.

9. Verfahren nach einem der Ansprüche 6 bis 8, wobei das Steuerteilfeld ein drittes Steuerteilfeld ist, das die erste Kanalbreitenanzeigeteilinformation und die zweite Kanalbreitenanzeigeteilinformation umfasst, und der Responder (STA) die erste Kanalbreitenanzeigeteilinformation und die zweite Kanalbreitenanzeigeteilinformation gemeinsam analysiert, um eine angezeigte Kanalbreite zu erhalten.

10. Kommunikationseinrichtung, die konfiguriert ist, um das Verfahren nach einem der Ansprüche 1 bis 5 oder einem der Ansprüche 6 bis 9 durchzuführen.

11. Computerlesbares Speichermedium, wobei das computerlesbare Speichermedium konfiguriert ist, um ein Computerprogramm zu speichern, und wenn das Computerprogramm ausgeführt wird, das Verfahren nach einem der Ansprüche 1 bis 5 oder einem der Ansprüche 6 bis 9 implementiert wird.

## Revendications

1. Procédé de négociation pour un mode de fonctionnement amélioré, appliqué à un initiateur (AP) pour une négociation de mode de fonctionnement et comprenant :
l'envoi, par un initiateur (AP), d'une indication de mode de fonctionnement, OMI, à un répondeur (STA),
dans lequel l'OMI comprend des informations d'indication de largeur de canal et des informations d'indication de nombre de flux spatio-temporels, dans lequel une plage de capacité d'une largeur de canal indiquée par les informations d'indication de largeur de canal est supérieure à 160 MHz, et une plage de capacité du nombre de flux spatio-temporels indiqué par les informations d'indication du nombre de flux spatio-temporels est supérieure à 8,
dans lequel l'OMI est transportée dans des informations de commande correspondant à un sous-champ de commande, et les informations de commande comprennent au moins, soit des informations d'indication de largeur de canal, soit des informations d'indication du nombre de flux spatio-temporels, dans lequel le sous-champ de commande comprend un premier sous-champ de commande et un deuxième sous-champ de commande, et le premier sous-champ de commande est un sous-champ d'indication de base d'OMI, et le deuxième sous-champ de commande est un sous-champ d'indication d'extension d'OMI ; et le premier sous-champ de commande et le deuxième sous-champ de commande indiquent conjointement une OMI améliorée ; et
la réalisation, par l'initiateur (AP), d'une transmission avec le répondeur (STA).

2. Procédé selon la revendication 1, dans lequel le nombre de bits des premières informations d'indication de largeur de canal qui se trouve dans des informations de commande correspondant au premier sous-champ de commande et qui indique une largeur de canal est 2, le nombre de bits de deuxièmes informations d'indication de largeur de canal qui se trouve dans des informations de commande correspondant au deuxième sous-champ de commande et qui indique une largeur de canal est 1, et une plage de largeur de canal indiquée conjointement par les premières informations d'indication de largeur de canal et les deuxièmes informations d'indication de largeur de canal est de 20 MHz à 320 MHz.

3. Procédé selon la revendication 1 ou 2, dans lequel le nombre de bits de premières informations d'indication du nombre de flux spatio-temporels qui se trouve dans les informations de commande correspondant au premier sous-champ de commande et qui indique le nombre de flux spatio-temporels est 3, le nombre de bits de deuxièmes informations d'indication du nombre de flux spatio-temporels qui se trouve dans les informations de commande correspondant au deuxième sous-champ de commande et qui indique le nombre de flux spatio-temporels est 1, et une plage du nombre de flux spatio-temporels indiqué conjointement par les premières informations d'indication du nombre de flux spatio-temporels et les deuxièmes informations d'indication du nombre de flux spatio-temporels est comprise entre 1 et 16.

4. Procédé selon la revendication 3, dans lequel le nombre de flux spatio-temporels indiqué conjointement par les premières informations d'indication du nombre de flux spatio-temporels et les deuxièmes informations d'indication du nombre de flux spatio-temporels est inférieur ou égal au nombre de flux spatio-temporels d'une valeur de largeur de canal prédéfinie.

5. Procédé selon la revendication 1, dans lequel l'OMI est transportée dans des informations de commande correspondant à un troisième sous-champ de commande, et les informations de commande comprennent au moins, soit des troisièmes informations d'indication de largeur de canal, soit des troisièmes informations d'indication de nombre de flux spatio-temporels, dans lequel les troisièmes informations d'indication de largeur de canal sont de 3 bits et indiquent une plage de largeur de canal comprise entre 20 MHz et 320 MHz ; et les troisièmes informations d'indication du nombre de flux spatio-temporels sont de 4 bits et indiquent qu'une plage du nombre de flux spatio-temporels est comprise entre 1 et 16.

6. Procédé de négociation pour un mode de fonctionnement, appliqué à un répondeur (STA) pour une négociation de mode de fonctionnement et comprenant :
la réception d'une indication de mode de fonctionnement, OMI, à partir d'un initiateur (AP),
dans lequel l'OMI comprend des informations d'indication de largeur de canal et des informations d'indication de nombre de flux spatio-temporels, dans lequel une plage de capacité d'une largeur de canal indiquée par les informations d'indication de largeur de canal est supérieure à 160 MHz, et une plage de capacité du nombre de flux spatio-temporels indiqué par les informations d'indication du nombre de flux spatio-temporels est supérieure à 8,
dans lequel l'OMI est transportée dans des informations de commande correspondant à un sous-champ de commande, et les informations de commande comprennent au moins, soit des informations d'indication de largeur de canal, soit des informations d'indication du nombre de flux spatio-temporels, dans lequel le sous-champ de commande comprend un premier sous-champ de commande et un deuxième sous-champ de commande, et le premier sous-champ de commande est un sous-champ d'indication de base d'OMI, et le deuxième sous-champ de commande est un sous-champ d'indication d'extension d'OMI ; et le premier sous-champ de commande et le deuxième sous-champ de commande indiquent conjointement une OMI améliorée ; et
la réalisation d'une transmission avec l'initiateur (AP) en fonction de l'OMI.

7. Procédé selon la revendication 6, dans lequel le répondeur (STA) analyse conjointement des premières informations d'indication de largeur de canal dans le premier sous-champ de commande et des deuxièmes informations d'indication de largeur de canal dans le deuxième sous-champ de commande, afin d'obtenir une largeur de canal indiquée.

8. Procédé selon la revendication 6, dans lequel le répondeur (STA) analyse conjointement des premières informations d'indication de nombre de flux spatio-temporels dans le premier sous-champ de commande et des deuxièmes informations d'indication de nombre de flux spatio-temporels dans le deuxième sous-champ de commande, afin d'obtenir un nombre indiqué de flux spatio-temporels.

9. Procédé selon l'une quelconque des revendications 6 à 8, dans lequel le sous-champ de commande est un troisième sous-champ de commande, comprenant des premières sous-informations d'indication de largeur de canal et des secondes sous-informations d'indication de largeur de canal, et le répondeur (STA) analyse conjointement les premières sous-informations d'indication de largeur de canal et les secondes sous-informations d'indication de largeur de canal, afin d'obtenir une largeur de canal indiquée.

10. Appareil de communication, configuré pour réaliser le procédé selon l'une quelconque des revendications 1 à 5 ou selon l'une quelconque des revendications 6 à 9.

11. Support de stockage lisible par ordinateur, dans lequel le support de stockage lisible par ordinateur est configuré pour stocker un programme informatique, et lorsque le programme informatique est exécuté, le procédé selon l'une quelconque des revendications 1 à 5 ou selon l'une quelconque des revendications 6 à 9 est mis en oeuvre.
